# EUROPEAN PATENT SPECIFICATION

(11) **EP 0 537 391 B1**
(45) Date of publication and mention of the grant of the patent: **09.12.1998**
(21) Application number: 91309551.9
(22) Date of filing: 17.10.1991
(51) Int. Cl.: G06F 17/24, G06F 17/60

(54) **Desktop forms order system**
Rechnergestütztes Formularsbestellungssystem
Système de commande de formulaires par ordinateur

(43) Date of publication of application: 21.04.1993
(73) Proprietor: MOORE BUSINESS FORMS, INC., Grand Island New York 14072-1697 (US)
(72) Inventor: Greulich, Kenneth R., Youngstown, New York 14174 (US); Broad, Thomas M., South Wales, New York 14139 (US)
(74) Representative: Spence, Anne

(56) References cited:
- EP-A- 0 338 770
- EP-A- 0 451 485
- WO-A-91/07719
- US-A- 4 992 940
- BUSINESS FORMS, LABELS & SYSTEMS, vol. 29, no. 12, 20th June 1991, pages 76-77, US; "Total automation reaches the Business Forms Industry"
- BUSINESS FORMS & SYSTEMS, vol. 24, no. 16, 20th August 1986, pages 50,52, US; J.B. WEINZIERL: "Computerizing estimating, order entry, inventory"
- TODAY'S OFFICE, vol. 24, no. 1, June 1989, pages 62-63, US; B. RADFORD: "Facsimile means business for Curtis 1000"
- J. MEYER 'Xerox Ventura Publisher Edition Reference Guide' 1987 , RANK XEROX LIMITED , WELWYN GARDEN CITY, UK

## Description

### BACKGROUND AND SUMMARY OF THE INVENTION

In the sale, printing, and distribution of custom business forms, the customary practice has been for a sales representative of a large business forms manufacturer to design a form for a customer, then write up an order for the form and submit it to a plant for production. The write up of the form and the submittal of the order typically were done manually. While that procedure is extremely worthwhile for large orders of forms, especially since it involves the expertise of someone skilled in business form design, for short runs of forms, e.g. less than 5,000, there are many circumstances in which it is not cost effective to proceed in this traditional manner. Partly for that reason, a number of software packages have been developed which allow someone with a personal computer to design business forms directly on the computer. If the designer has sophisticated printing equipment, then the forms may be printed by the designer, even including multipart or continuous forms. However where the user does not have sophisticated printing equipment, the forms design alone is not useful, because the forms design must then be reduced to paper, and the paper submitted to a forms manufacturer.

Typical computer software that has been developed for the design of business forms ranges from relatively simple software -- e.g. that sold under the trademark PerFORM by Delrina Technology, Inc of Canada -- to extremely sophisticated forms design packages intended to be used by forms manufacturers -- such as the F3 Pro Designer™ software sold by Bloc Development Corporation of Coral Gables, Florida.

One approach that has been taken that attempts to deal with some of the problems in the prior art for short run orders is the provision of software that allows one to place an order for forms directly from a computer terminal. AlphaGraphics, Inc of Tucson, Arizona provides software packages that allow one to "customize" information on a very limited number of pre-existing forms by inserting one's name, address, and logo on the forms. This "customizing" information is then transmitted via disk or electronically to AlphaGraphics, along with an order also placed by computer, for printing of the forms. While this can simplify the procedure for obtaining short runs of business forms, because of the very limited number of standard forms available, it is not only for the production of custom forms, rather merely just for the provision of customizing information on pre-existing standard forms.

EP-A-0451485 provides a computer and program for designing the layout of what is to be printed on a business form, eg layout of tables, geometrical shapes, check boxes, bar codes etc. It also provides for filling in the text in the designed layout. The form is printed at the location of the computer, directly from the computer.

EP-A-0338770 provides a mainframe computer with rigid coded input requirements and a personal computer in which purchasing requirements can be entered in a form easily understood by the user, the personal computer being arranged to convert the information into the rigid code for use by the mainframe computer.

The present invention provides a system for ordering the production of custom business forms according to claim 1, and a method for producing short runs of custom business forms according to claim 13.

According to the present invention, it is possible to create truly custom business forms having a wide variety of parameters, designs, verbiage, and the like, at a customer's personal computer. The customer can then place an order for that custom form directly from his/her personal computer, and transmit the custom form -- as well as order information -- electronically (or by disk) to an order receiving location. At the order receiving location, an order verification may be printed, credit may be verified or payment made by credit card or the like, and a determination may be made about the best location to print the form based upon where the form is to be delivered, form parameters, and the like. The form and order information may be then transmitted electronically to a manufacturing location at which the form is printed and shipped. In this, way, the total functions of forms design, ordering, and printing can be simplified.

A number of advantages associated with the invention are: the ability to allow the customer to lay out its own forms on personal computers; eliminates or reduces labor intensive portions of business form order preparation, such as design and composition; manages and automates the entire order entry process; decreases the time required to produce and deliver short run orders of business forms; and reduces the manufacturer's overhead costs in producing short run orders.

In order to maximize the utility and "user friendliness" of the system according to the invention, it is highly desirable to provide various graphic features and computer screen formats. Significant features are: the highlighting of only those functions that need be utilized on a particular screen, and/or highlighting only the available options from all of the options that are displayed; overlaying one screen on top of another so that significant portions of the underlying screen are available for viewing at the same time further options are being selected; and/or actually illustrating an object (business form) to be produced in pictorial manner so as to allow the user to readily visualize how the final form construction will appear, which can be particularly significant for multipart forms that are connected together along one edge.

The second control means also preferably further comprises means for distinctively displaying which of the second plurality of business form parameters has not been automatically determined from the custom business form, and requiring operator selection through the operator interface means of the distinctively displayed ones of the second plurality of business form parameters before the order can be completed or transmitted by the first communication means.

The second plurality of parameters comprises a form type parameter which includes single sheet and multisheet edge connected set options. The form type parameter for the multisheet edge connected set option includes the further parameter of which edge the sheets of the set are to be connected at, and the second control means further comprises means for illustrating possible edges for connection dependent upon associated other parameters selected, and a pictorial simulation of the form configuration with the edge connection options highlighted, on the second computing means monitor. The second plurality of parameters typically include business form size, number of parts, color of ink, numbering options, and form type, the form type including continuous forms and multipart forms with the parts attached along an edge.

The second control means also preferably comprises means displaying a first plurality of options for selection once one of the second parameters is activated, and means for -- after selection of one of the first plurality of options -- displaying a second plurality of optinos for selection, and highlighting only those of the second plurality of options that are available for selection given the first plurality of options selected. This may be continued for other sets of options.

It is the primary object of the present invention to provide for the simplified and effective design, ordering, and production of short run orders of business forms, utilizing user friendly displays. This and other objects of the invention will become clear from an inspection of the detailed description of the invention, and from the appended claims.

### BRIEF DESCRIPTION OF THE DRAWINGS

Figure 1 is a schematic of exemplary hardware which may be utilized as part of the system according to the present invention;
FIGURE 2 is a flow sheet illustrating the major control options for the control procedures of the second control means of the apparatus of FIGURE 1;
FIGURE 3 is a flow sheet for the first option of the procedure of FIGURE 2;
FIGURE 4 is an illustration of a computer monitor with the general options illustrated in FIGURE 3 displayed, as well as other order information;
FIGURES 5A and B are each a view like that of FIGURE 4 only showing a subset of options, and in the case of FIGURE 5A a pictorial representative of a business form to be produced, displayed over the screen of FIGURE 4;
FIGURES 6 through 8 are flow sheets of other significant control procedures related to the basic control flow sheet of FIGURE 2;
FIGURES 9a through 9t are flow sheets illustrating sub-control procedures for the flow sheet of FIGURE 3;
FIGURES 9u-9aa are flow sheets illustrating sub-control procedures based upon the flow sheet of FIGURE 6;

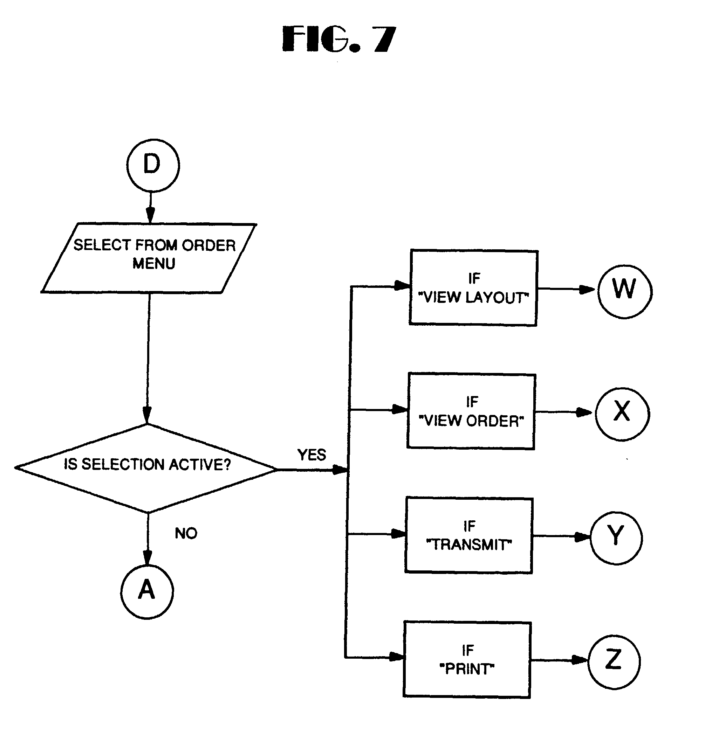

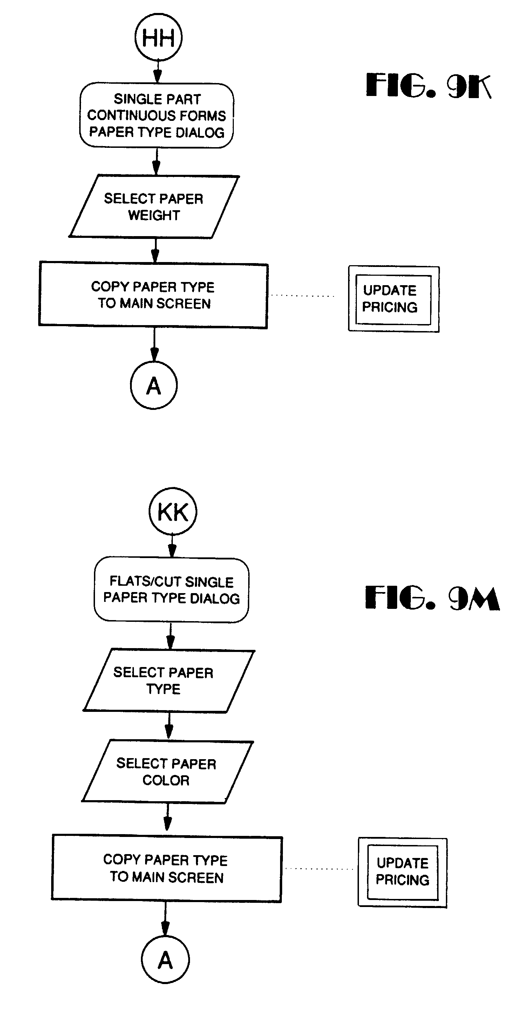

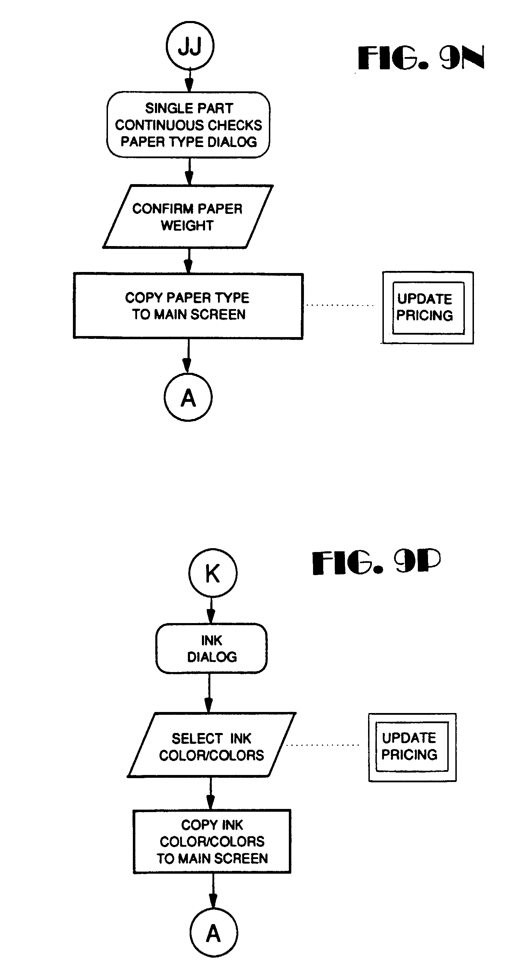

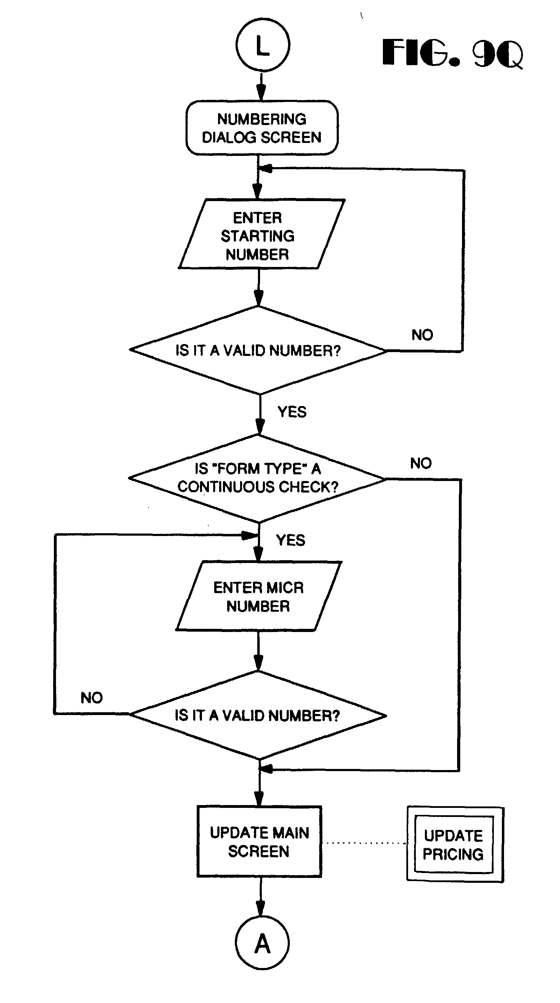

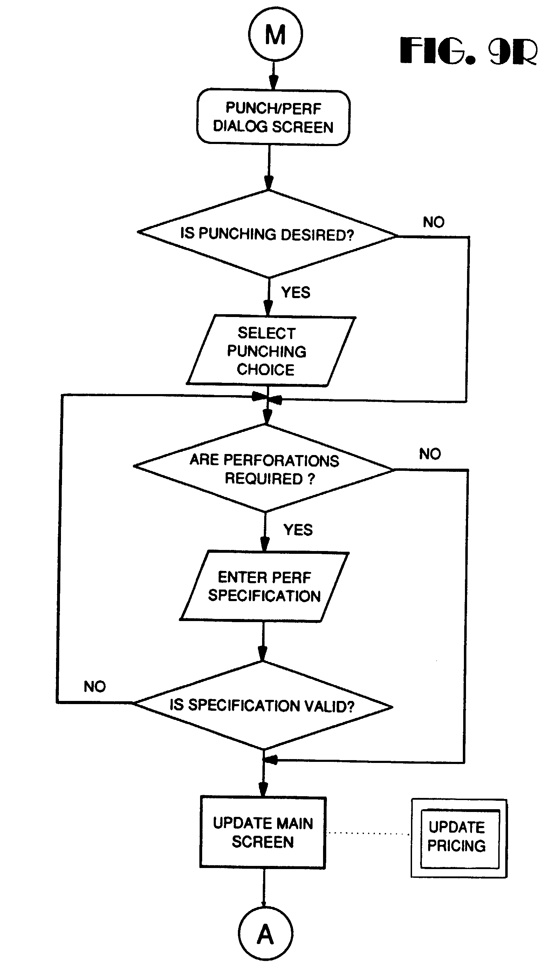

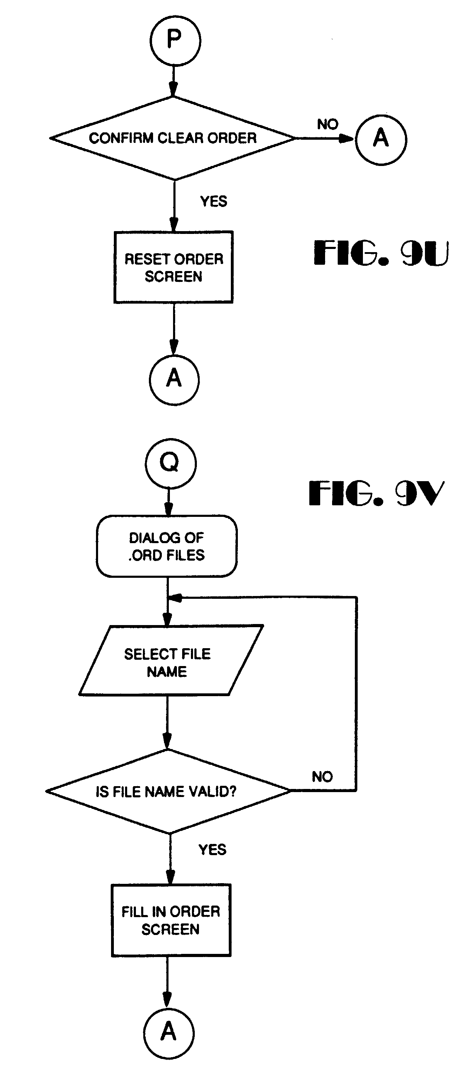

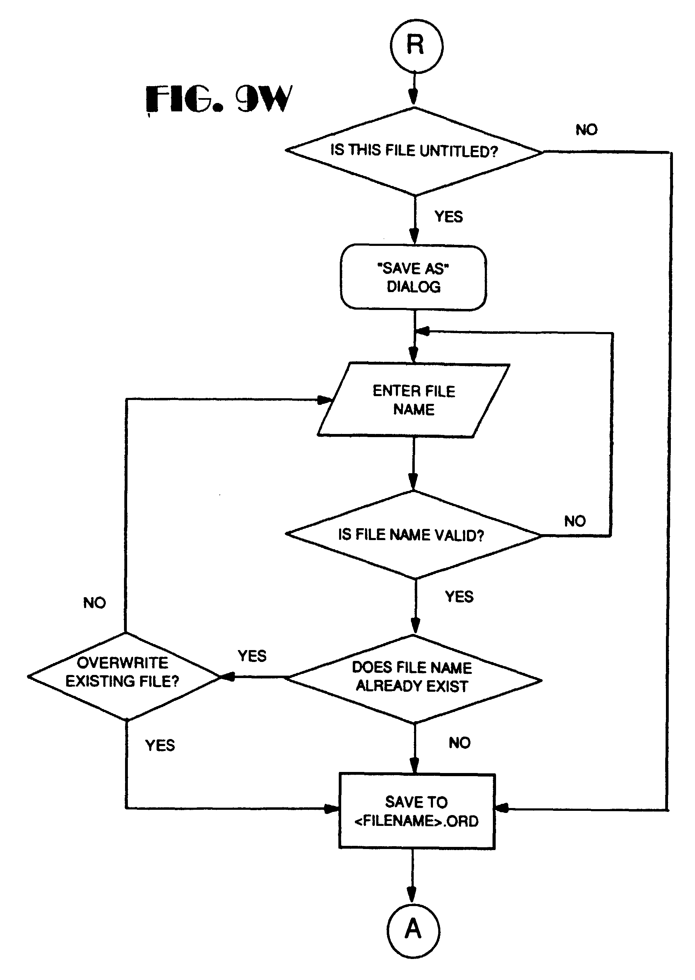

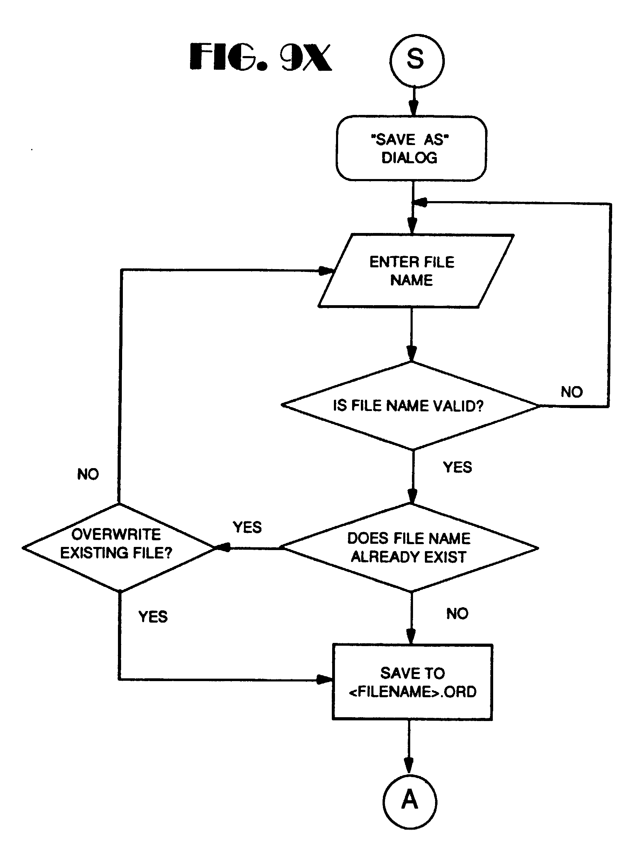

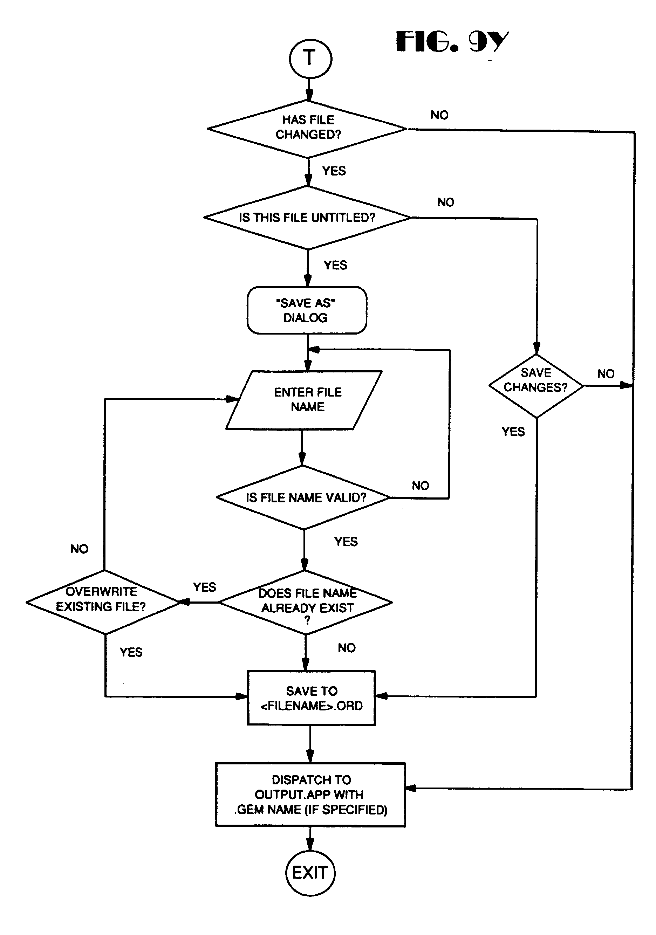

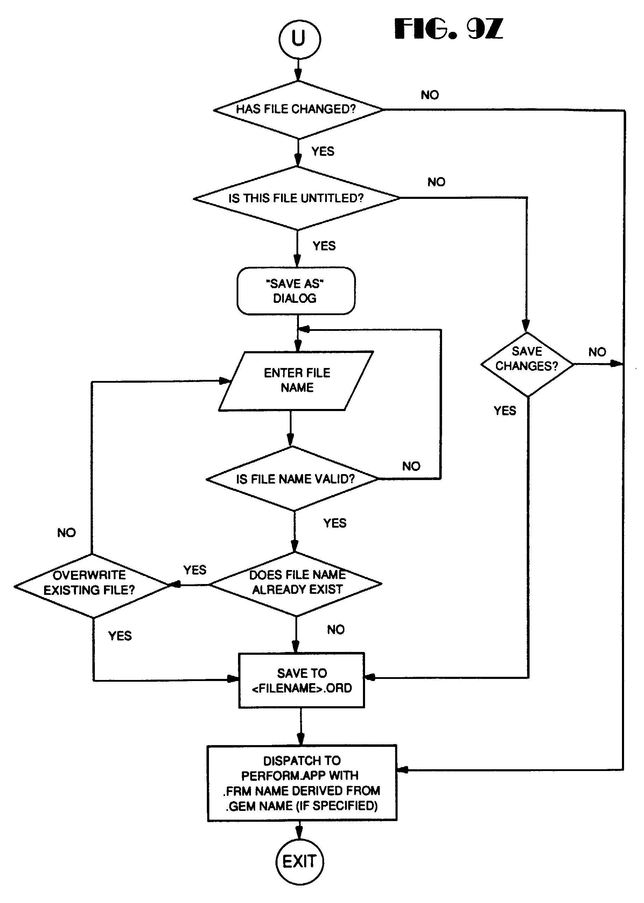

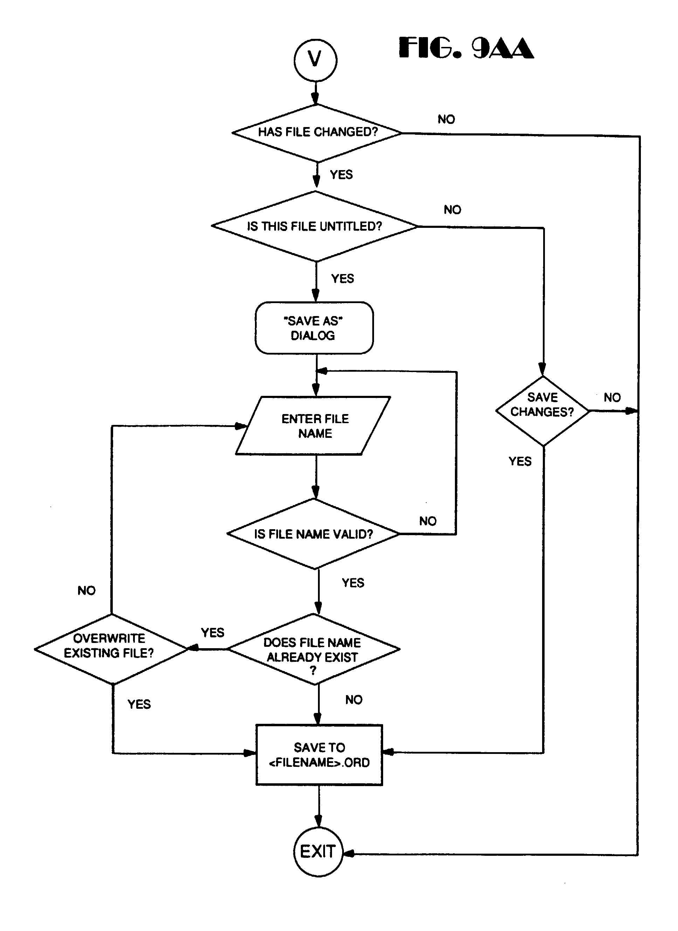

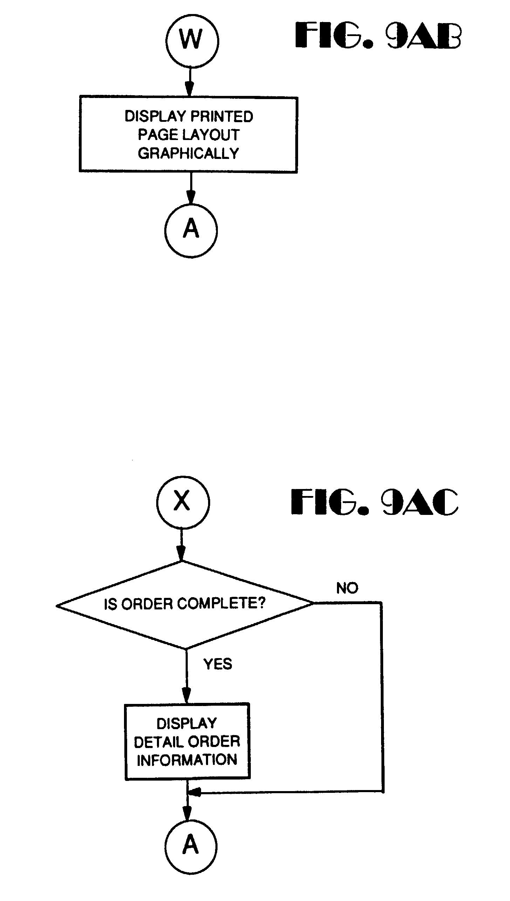

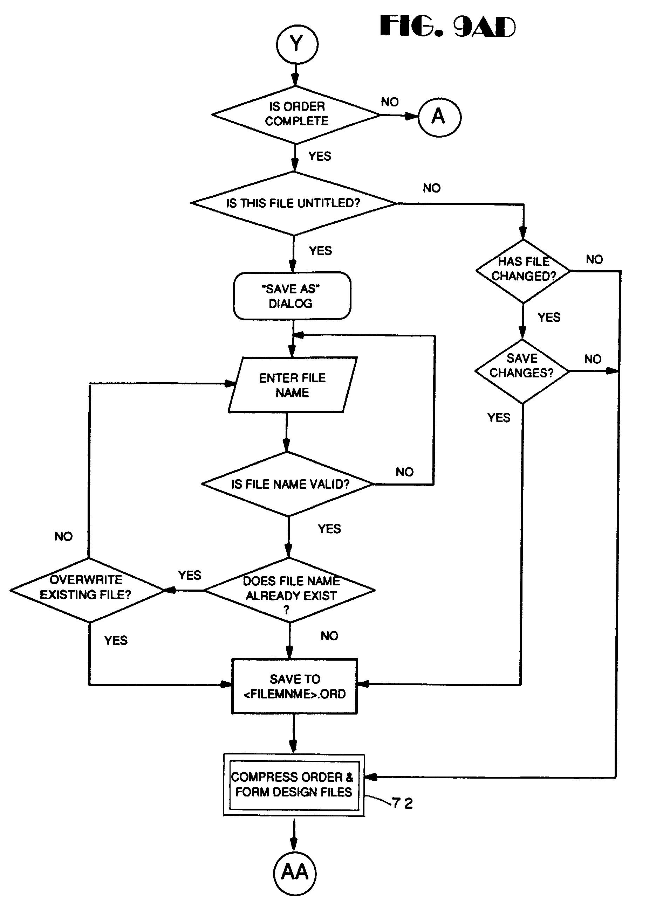

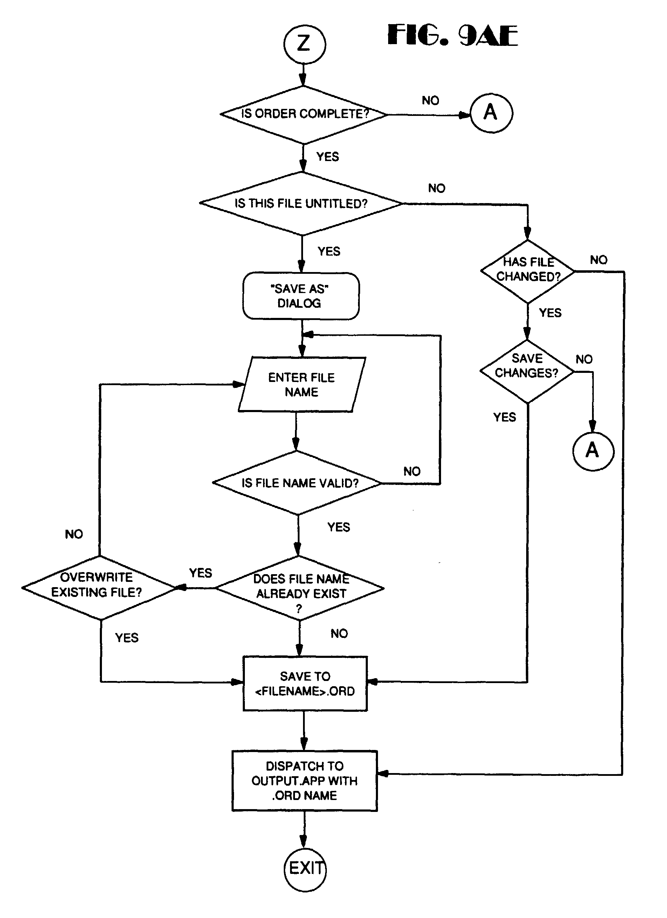

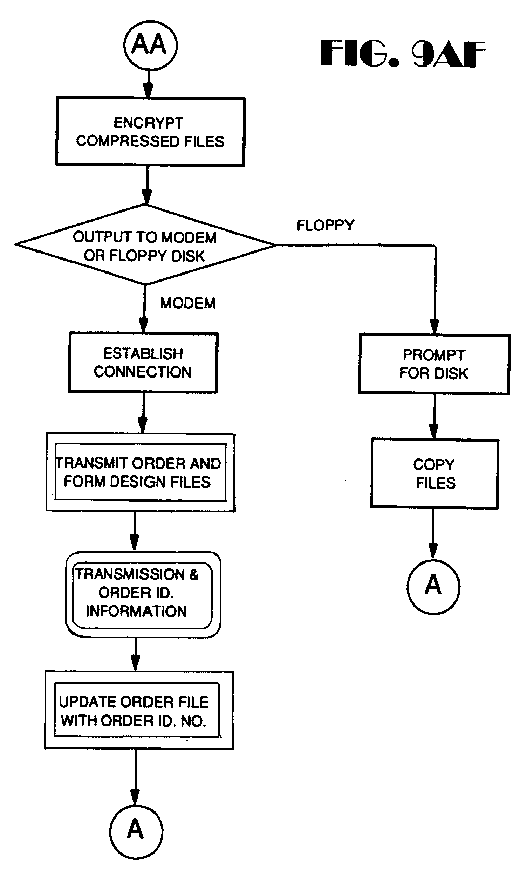

FIGURE 9ab-9af are flow sheets illustrating sub-control procedures related to the flow sheet of FIGURE 7;

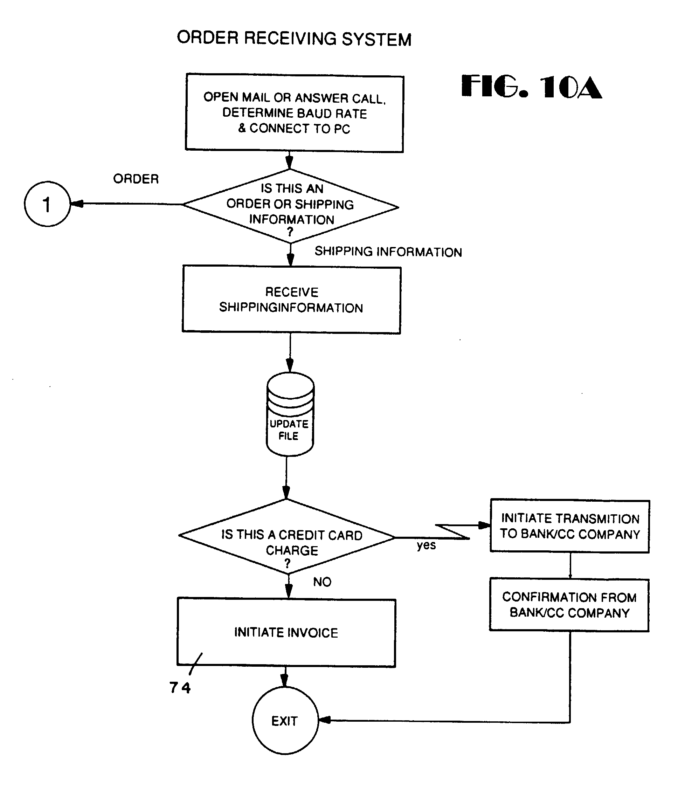

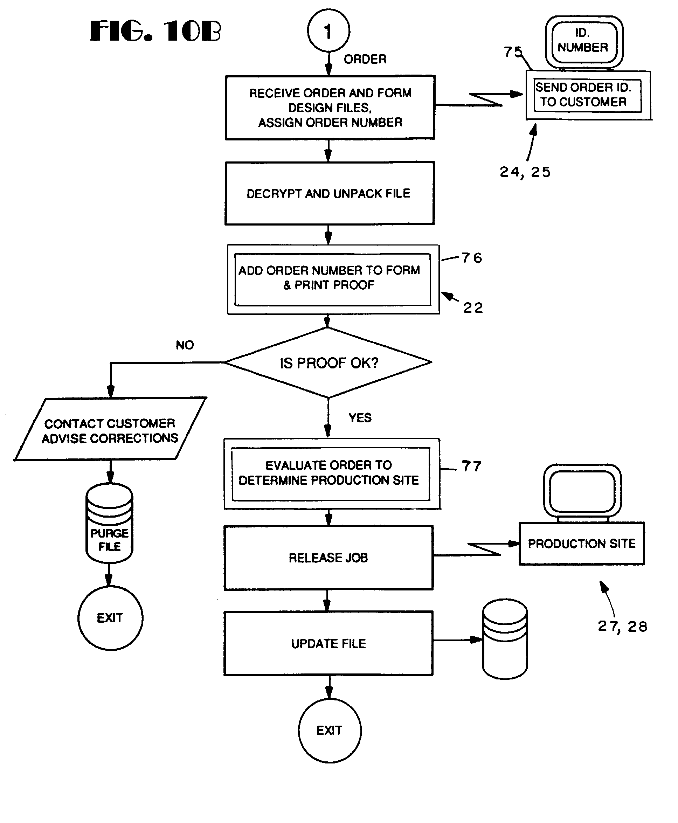

FIGURE 10a and 10b are flow sheets illustrating order receiving control procedures at the order receiving computer; and

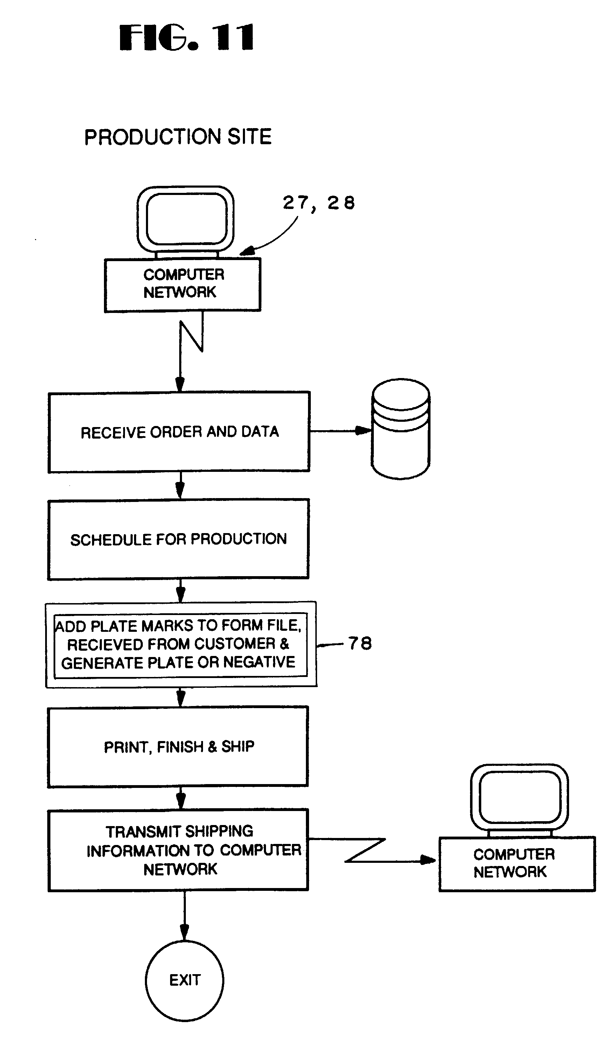

FIGURE 11 is a flow sheet showing the production site procedures after an order has been transmitted thereto.

### DETAILED DESCRIPTION OF THE DRAWINGS

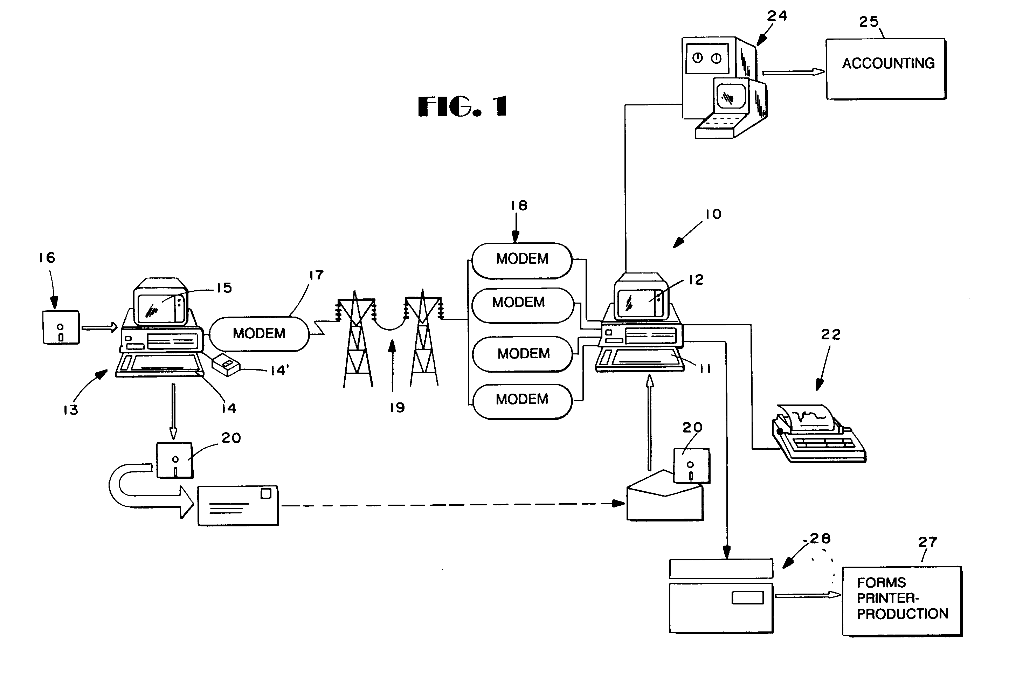

FIGURE 1 schematically illustrates exemplary hardware that is utilizable in the system according to the present invention. The hardware includes a first computing means, such as the personal computer 10, which preferably includes a keyboard 11 and/or other operator interface means (e.g. a mouse) and a monitor 12, at a first location, in this case the first location being an order reception facility of a business forms manufacturer. The first computing means 10 preferably comprises a personal computer for storing and manipulating data. A second computing means 13, having a keyboard 14 and/or other operator interface means such as mouse 14', and a monitor 15 is provided at a second location remote from the first location. The second location typically is a customer's office. A first control means -- typically comprising pre-recorded computer programs on a disk 16 or the like -- controls the second computer 13 for custom design of a plurality of first parameters of a business form, to produce a custom business form in machine format. The number and type of the first plurality of parameters depends upon the sophistication of the software comprising the first control means. For example if the software is a relatively simply forms design program, such as sold commercially under the trademark PerFORM, the details of the form and its basic size are provided among the first plurality of parameters, however more sophisticated parameters such as multipart or continuous form types, are not. If a sophisticated forms package -- such as the F3 Pro Designer package -- is utilized, then virtually all of the form parameters can be determined among the first plurality.

The system according to the invention also comprises a second control means for controlling the second computing means 13 and storing price information. The second control means controls the monitor 15 to display order parameters, including quantity and delivery options, for selection by an operator, and a second plurality of business form parameters. The second plurality of business form parameters may be co-extensive with the first plurality where the first control means is a sophisticated software package, but typically the second plurality of business form parameters are more extensive than the first. While a first and second control means are discussed, it should be understood that typically the forms design and order software would be integrated on a common disk 16, for ready interaction.

The first and second control means on disk 16 ultimately control the personal computer 13, utilizing the monitor 15 and operator interface 14, to produce a custom business form in machine format, and order information relating to that business form, including quantity and shipping information. In this regard it is noted that "custom business form" means a form having a wide variety of verbiage, graphical representations, positioning of component parts, and the like determined by the designer, not merely address and logo information. First communication means are provided for transmitting the custom business form in machine format, and the completed order in machine format, from the second computer 13 to the first computer 10. Such communication means preferably takes the form of the modems 17, 18 (carried over public telephone lines 19), but alternatively the machine format of the custom form and order may be captured on a disk 20 and mailed to the order receiving facility at which the first computer 10 is located.

The first computer 10 preferably is connected via modems 18, etc., to the first computer 13 for another purpose. It is highly desirable that up-dated price information be transmitted from the first computer 10 to the second computer 13. This may be done periodically as long as the second computer 13 is in a position to receive the up-dated pricing information (e.g. when it requests it), or it may be done at the time of a transaction, the up-dated price information being transmitted by the first computer 10 before it allows the second computer 13 to transmit order and custom business form information.

At the order receiving facility at which the computer 10 is located, the orders are received in electronic form by the computer 10, and are logged, with the order information desirably retained for possible future reorders. The order format will typically be in ASCII format, and a proof may be printed out on a proof printer 22 for review and editing. The form data may be in native file format or in PostScript output.

The first computer 10 could communicate through conventional order tracking equipment 24 with an accounting facility or computer 25. This would provide for a credit verification, application of charges from a credit card, and the production of an order confirmation which would be sent to the customer, either by mail or via computer (to the second computer 13).

The first computer 10 also communicates with a forms printing or production facility 27.
Typically, the custom form would be transmitted in PostScript format for ready use by an imaging system or the like, such as the Linotronic imaging system 28. Alignment marks for perforations and punches will be contained in the data file transmitted from the computer 10, but cut marks for plate trimming will be added. In some circumstances it may be necessary to step-and-repeat a form image, and add gap marks. The computer 10 and/or order tracking system 24 will determine which of a plurality of available production facilities 27 would be best suited for producing the particular custom form, depending upon scheduling, geographical location, and capabilities of the facilities 27, particularly with respect to the shipping location for the forms. Ultimately the forms will be printed at a forms production facility 27 and shipped to whatever location the customer specified, whether at the same location as the second computer 13 or some other branch office of the customer.

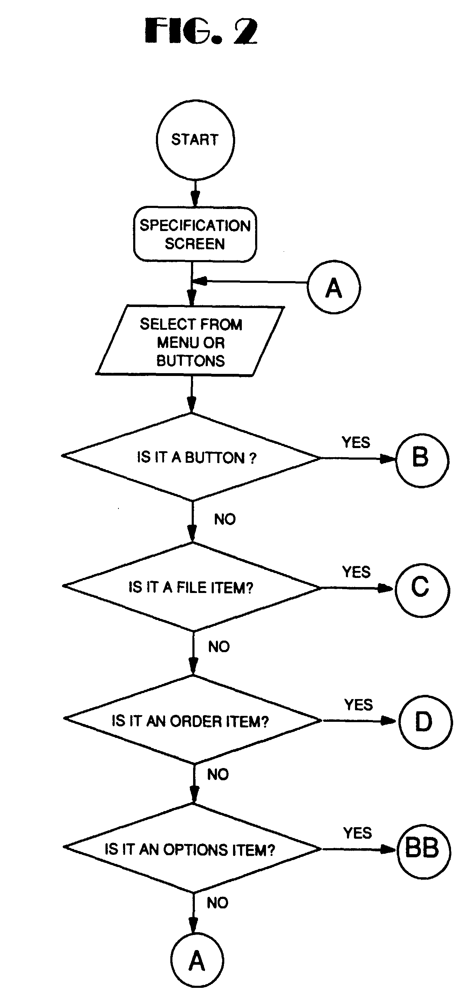

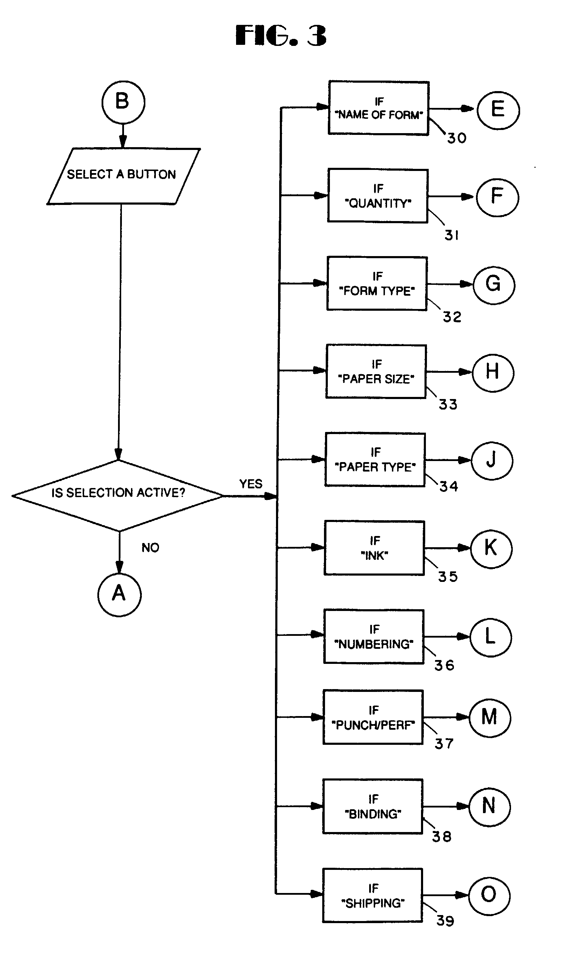

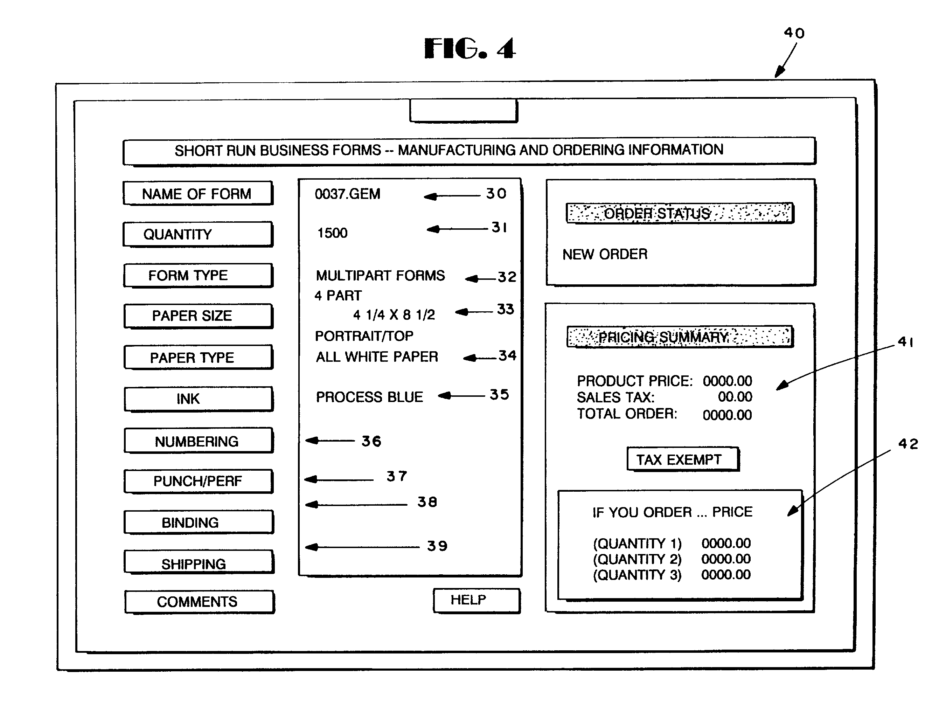

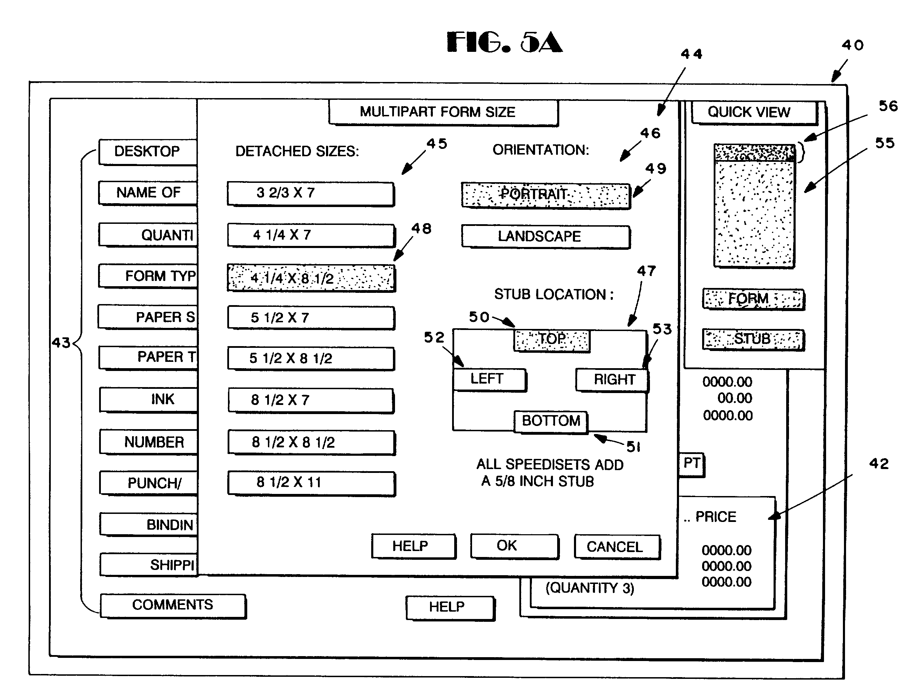

FIGURE 2 illustrates the basic flow chart for the major control procedures for the second control means (the first control means being commercially available, e.g. as from Delrina Technology, Inc.). Where a button -- typically activated by using a mouse -- is to be selected, then the control procedures set forth in FIGURE 3 is initiated. According to the present invention it is desirable that all of the options set forth in FIGURE 3 be available. The option 30 is merely to allow capture of the custom form that has already been designed in the forms software (a first control means) to be captured into the order program (second control means). The quantity information 31 must at all times be inputted into the order program. The second plurality of parameters -- those provided in the order software (second control means) --preferably include form type 32, paper size 33, paper type 34, ink 35, numbering 36, punching or perfing 37, and binding 38. Shipping information -- 39 -- must be provided as one of the ordering elements, like the quantity 31.

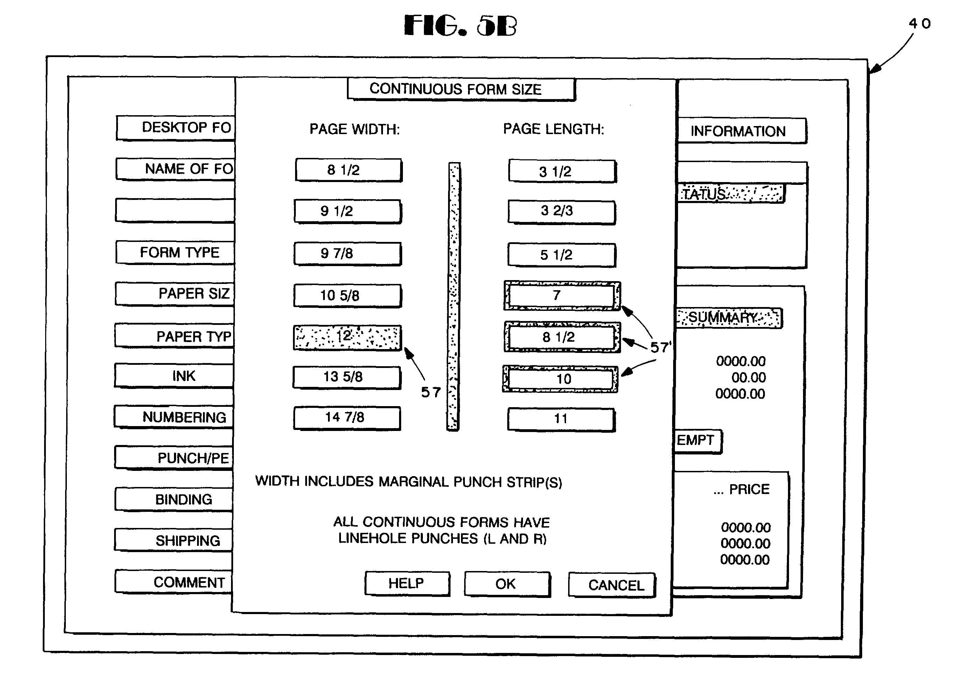

FIGURE 4 shows a typical screen 40 which successfully implements the flow chart of FIGURE 3 in a user friendly manner. The operator keys in the name of the form at 30. The form name will have been determined in the business form design software (first control means), and by entry of the form name after it is keyed in at 30, the custom form which has been designed in the forms design package is captured. Automatically any of the parameters 32 through 38 which were previously determined in the forms design package (the first plurality of parameters) will be inputted in the order software (second control means). For the example illustrated in FIGURE 4, if after entry of the form name 30 and the quantity 31 the display illustrated in FIGURE 4 came up, that would mean that form type (multipart -- four part -- forms), paper size (108 mm x 216 mm (4 1/4 x 8 1/2 inches)in the portrait configuration, the parts held together at the top edge), the paper type (all white paper), and the ink color (process blue) would have been determined in the first control means -- the form design software. Any numbering, punching or perfing, or binding to be done would then be selected among the parameters 36 through 38. In order to make the system as user friendly as possible, if the parameters 32 through 35 have already been automatically entered, the indicia on the left hand side of the screen 40 associated therewith will be highlighted in some manner, such as a more vibrant color, a darker tone, a black border around the indicia, etc., while the indicia associated with the parameters yet to be considered -- parameters 36 through 38 -- will be in regular format.

Before or after the desired parameters 32 through 38 have been selected, the quantity 31 and shipping instructions (typically an address and a type of shipping -- either overnight or regular) will be entered, and the second computing means automatically calculates the price, sales tax, and the amount of the total order, as indicated at 41 in FIGURE 4. In order to provide the customer with information that can assist him/her in optimizing the order, a display 42 is also preferably provided showing the different prices that exist if different quantities are ordered. For example if there are three different standard quantities that can be ordered (e.g. quantity one 1,000 forms, quantity two 1,500 forms, quantity three 3,000 forms), the price for the particular custom form designed for each of those quantities will be displayed in the box 42 so that the quantity information at 31 can be changed by the customer before the order is transmitted to the first computer 10.

Note that indicia indicating each of the second business form parameters, and order parameters, are provided on the left side of the screen in FIGURE 4 in rectangular boxes. The boxes may be highlighted to indicate which parameters are yet to be determined.

FIGURES 5A and 5B illustrate another aspect according to the present invention which makes the system according to the invention very user friendly, while allowing the selection of numerous options. With respect to FIGURE 5A, assuming that the form type procedure 32 has been selected so that the custom form to be produced is a multipart form (the "form type" function would typically allow selection of single sheets, checks, multipart forms, continuous forms, and among multipart forms either two, three, or four part forms), when the paper size 33 function is initiated, a graphic display 44 is provided on the screen 40 overlying, but not completely obscuring, the first set of options 43 on the screen 40. As clearly seen in FIGURE 5A, while the graphic display 44 is itself readily readable, the user is still able to see the basic selectable options 43.

On the graphic display 44 are a second set of options 45, a third set of options 46, and a fourth set of options 47. The second set of options 45 provide for various lengths and widths of forms, the display 44 coming on the screen 40 when the function 33 is selected. The third set of options 46 is the orientation of the rectangular form determined by the sizes 45. The orientation can either be portrait (long edge vertical) or landscape (long edge horizontal). The options 45, 46 are selected by moving a mouse arrow (or cursoring) to the desired option and then indicating preliminary selection (e.g. as by pressing a mouse button, or a key on a keyboard 14). For example for the particular display illustrated in FIGURE 5A, the size 108 x 216 mm (4 1/4 inches x 8 1/2 inches) -- 48 -- is highlighted, while the orientation "portrait" -- 49 -- is highlighted. Once the selections of the options 45, 46 have been made, then the fourth set of parameters 47 -- the stub location -- are partially predetermined. For example, as illustrated for the display in FIGURE 5A, with a size of 108 x 216 mm (4 1/4 x 8 1/2 inches) and an orientation of portrait, the only stub locations that are practical are the top and bottom, illustrated by reference numerals 50, 51. This is indicated on the display of FIGURE 5 since the indicia for the options 50, 51 are bold, while the indicia for the left and right options 52, 53 are discrete (light) rather than bold. Thus the customer knows that he has only two of the normal four options of the fourth options 47 available, and will select the appropriate one.

As a further very desirable feature according to the invention, in order to allow the operator to visualize the form that will be produced when the options indicated in bold in FIGURE 5 (48, 49, 50) are selected, a pictorial illustration 55 is provided of the business form to be produced. Note that the top of the pictorial illustration is bold -- as indicated at 56 -- in accordance with the "top" selection at 50 of the fourth options 47. If the operator cursors to the "bottom" selection 51 instead, then the bold part 56 will move to the bottom of the pictorial illustration 55. While this feature is described with respect to the connection of multipart forms along a particular edge, it is to be understood that this feature can also be utilized for other form functions, such as perforations, etc.

FIGURE 5B illustrates another exemplary screen which uses an overlay feature. In this case, the "Form Type" selection made was "Continuous". The screen that has been overlaid on screen 40 after the "Paper Size" button is activated -- as seen in FIGURE 5B -- requires selection of paper width first. Once a paper width 57 has been elected -- in this case "12 inches", that selection is highlighted, and then the only possible length options 57' given that width selection -- in this case 178, 216 and 254 mm (7, 8½, and 10 inches) -- are highlighted over) by making a bolder border, by color, or by general intensity. The operator then selects from among those options 57' e.g. by using the mouse arrow illustrated, and enters that choice. [Note that the features illustrated in FIGURE 5B are schematically described in FIGURE 9f.]

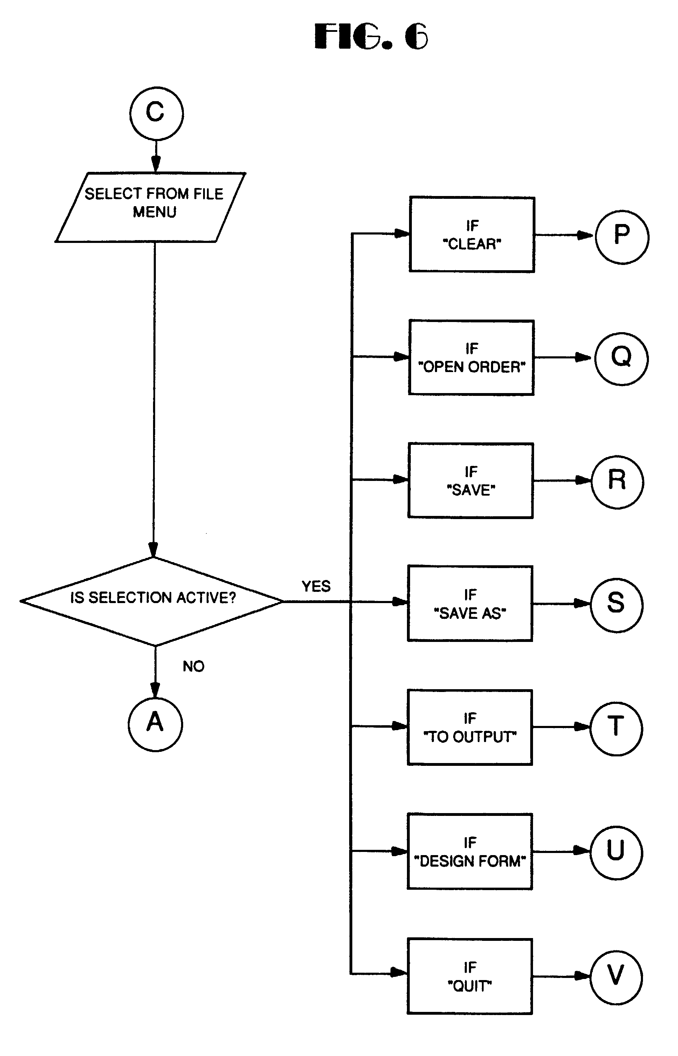

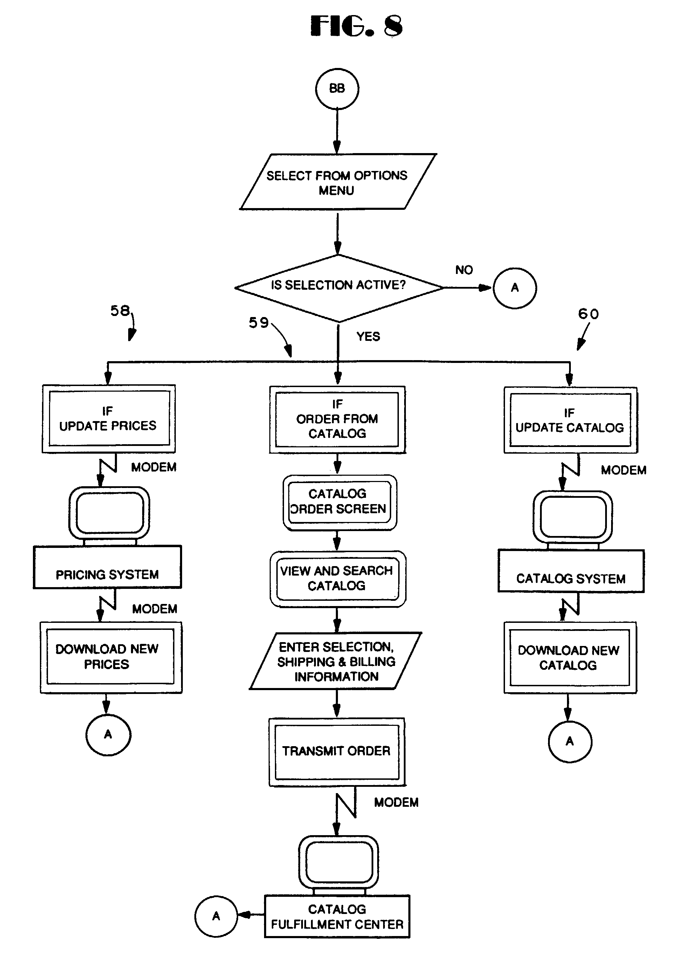

FIGURES 6 and 7 illustrate self-explanatory procedures that will be followed if the items C or D in FIGURE 2 are pursued. FIGURE 8 illustrates the last option (from top to bottom) in the major procedures flow chart of FIGURE 2. In the particular procedure of FIGURE 8, one can specifically request and receive the up-dated pricing information, as indicated by the column 58. As still further options, however, one can order from a catalog that is already loaded on the second computer 13, as indicated by the middle column options 59, or one can load up-dated information about the catalog (e.g. office product items and standard business forms in the catalog that have been added or discontinued, new prices, etc.) by the selection of the options illustrated in column 60.

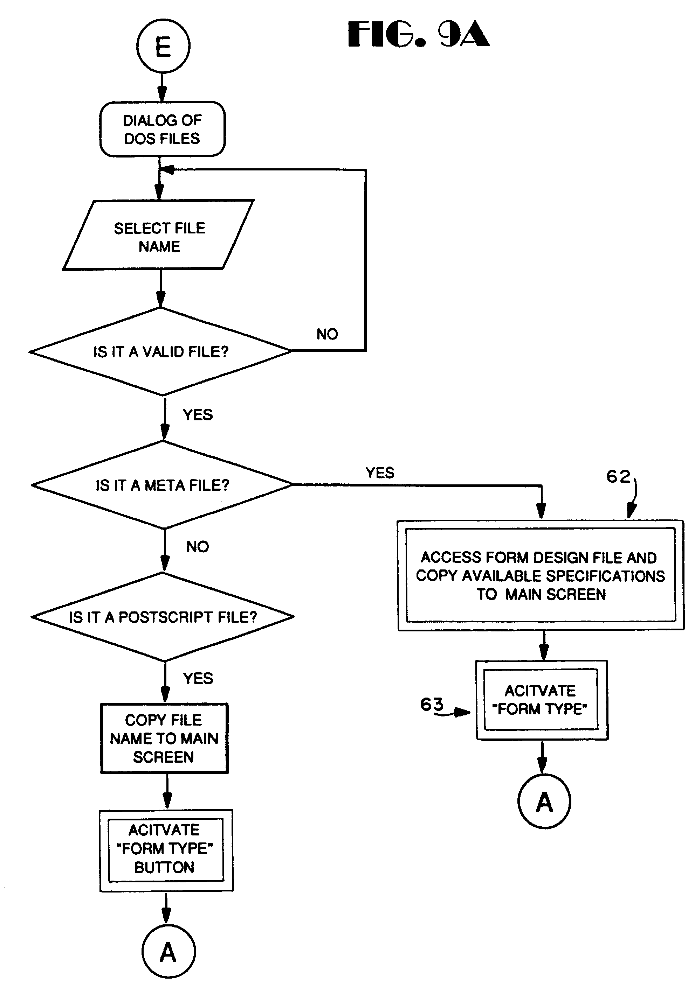

The flow charts of FIGURES 9a-9af are basically self-explanatory. However specific features or terminology that is not entirely readily understandable will be specifically described.

Wherever it is used, the word "dialog" describes a communication function, that is that the operator and the computer communicate with each other. This is opposed to an information box, which tells one what information is available, or gives options.

For the particular flow chart of FIGURE 9a, which relates back to the "name of form" function 30 of FIGURES 3 through 5, note procedure 62 which illustrates a novel feature of the invention whereby the design parameters (the first plurality of parameters) from the custom form in the form design software (e.g. PerFORM) are captured. The first of the second parameters which must be selected --since it controls most of the other parameters -- is the "form type" (e.g. continuous, single sheet, multipart, check, etc.), as illustrated at 63.

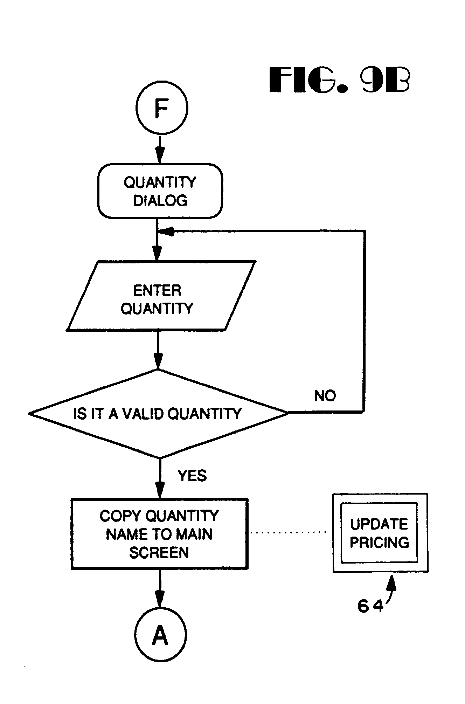

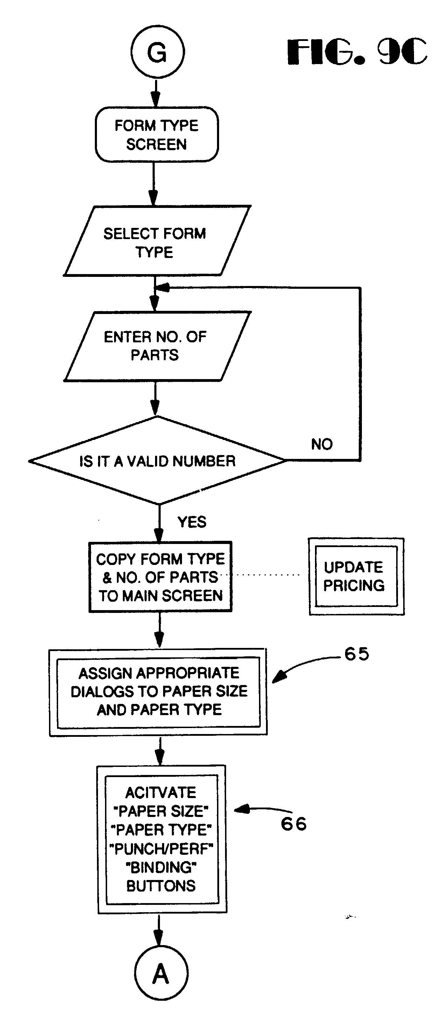

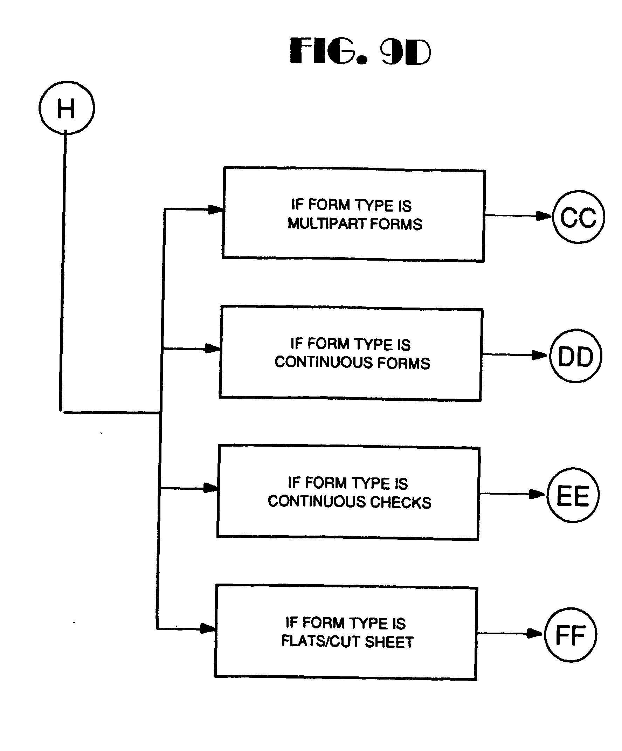

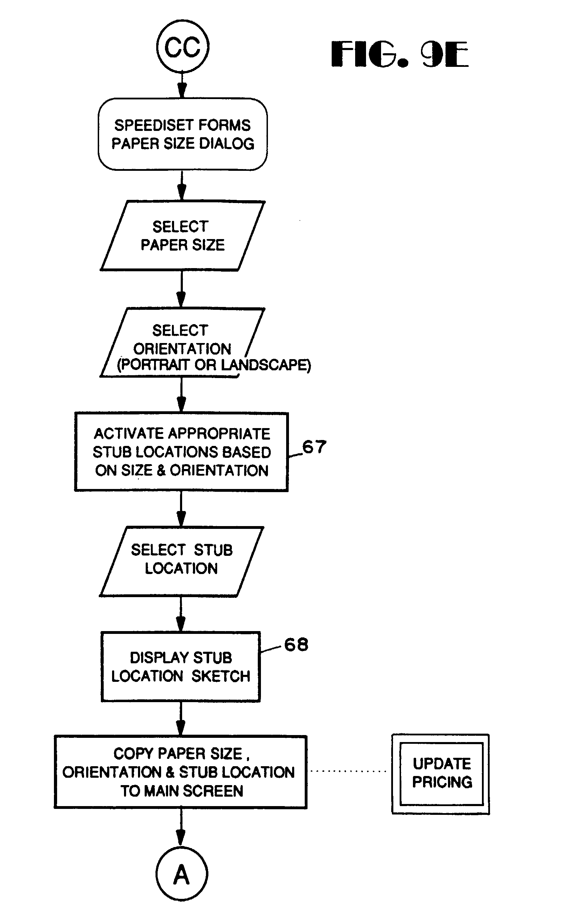

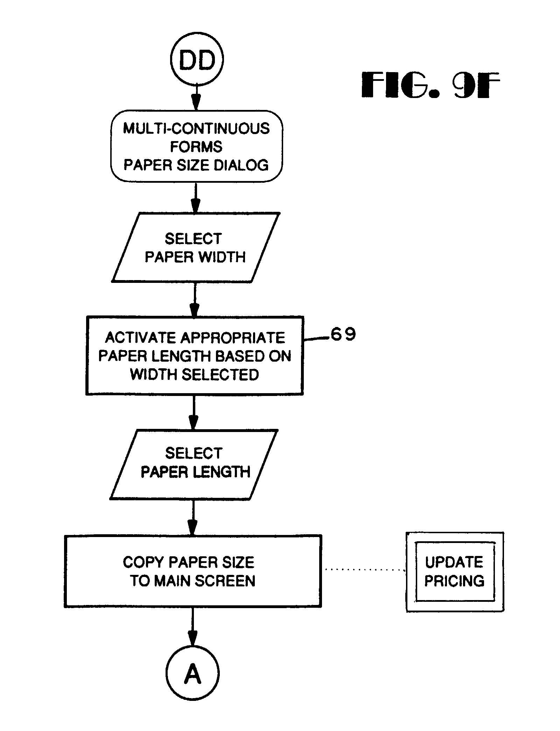

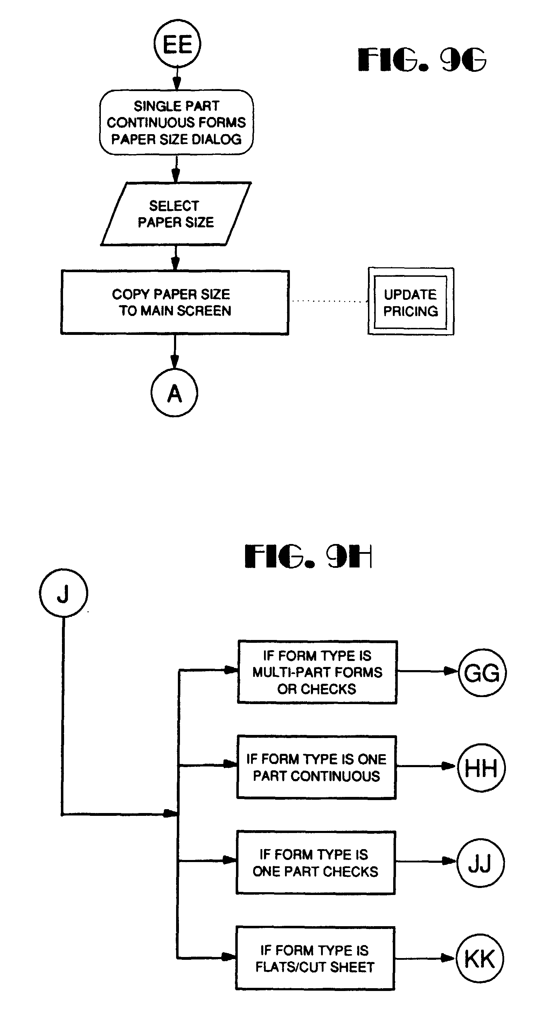

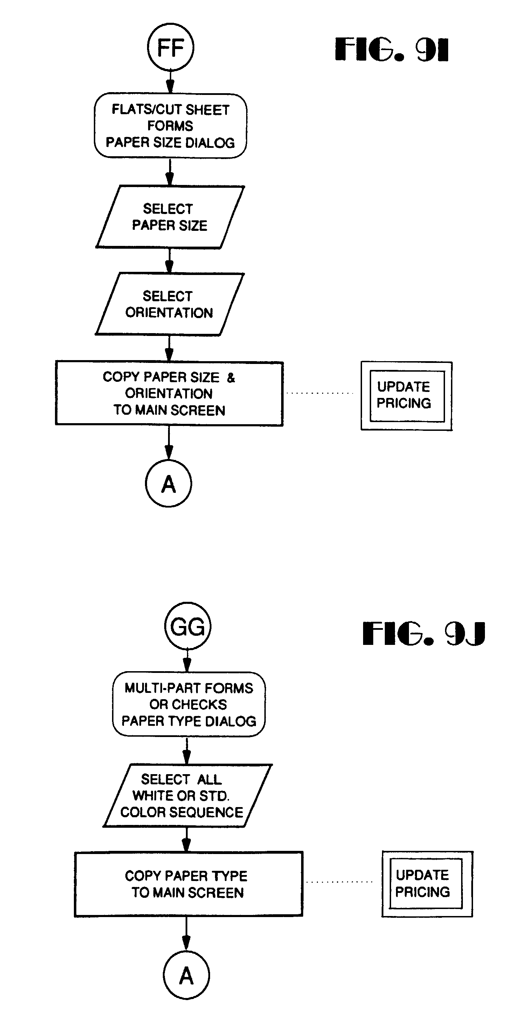

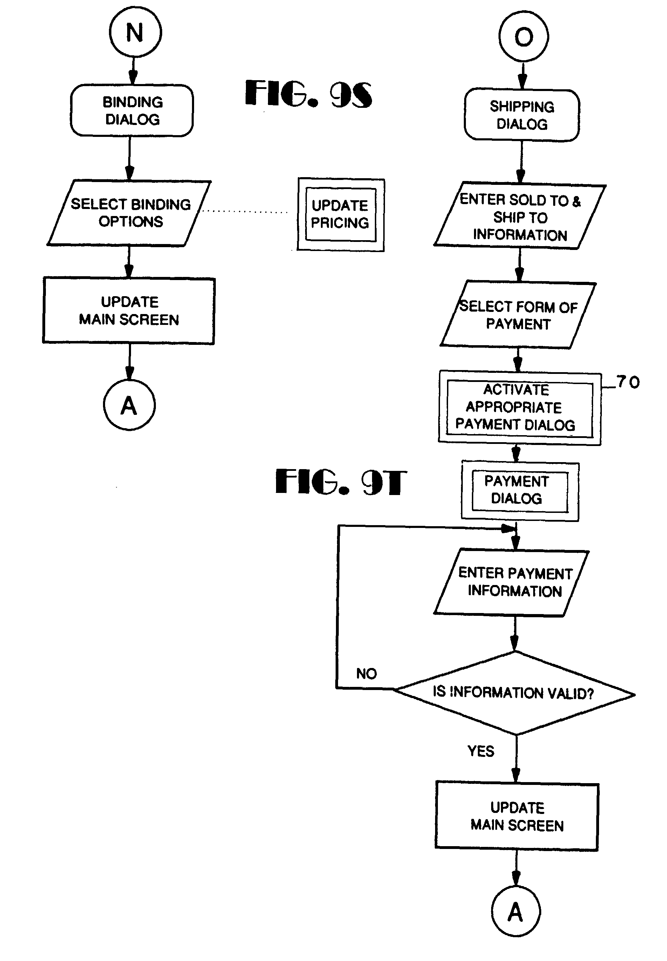

As illustrated in FIGURE 9b, in the quantity routine, updated pricing information is sent -- see box 64 -- to a subroutine to be stored and to be ultimately used to calculate a price when enough information has been received to calculate a price. As illustrated in the other parts of FIGURE 9, this price is recalculated and updated as more options (e.g. perforations) are added.

Pricing information that needs to be updated may be either provided automatically, or manually by the operator (e.g. see FIGURE 8 and column 58 thereof), or at the time of connection just prior to transmittal of the quantity and form information in machine format.

FIGURE 9c illustrates the routine followed once the form type function 32 is enabled. Depending upon the form type selected, the paper size and paper type options/functions (33, 34) will be determined. For example if the form type selected is "continuous" there will be one set of paper sizes available, whereas if it is "check" another set of sizes will be available. Similarly, if the form type is multipart the paper type options will be different than if the form type is a single sheet. For example for single sheet the only paper option may be white paper, whereas for multipart the paper type may be all white parts, or white and yellow for a two part form, or white, yellow and pink for a three part form, or white, yellow, pink and goldenrod for a four part form. Once the appropriate paper size and paper type dialogs have been assigned as indicated by box 65, then the appropriate additional function buttons are activated as indicated at 66.

As illustrated in FIGURE 9e by boxes 67 and 68 -- and as already described above with respect to FIGURE 5 -- once the paper size and orientation have been selected, the appropriate stub locations are activated, and once the stub location is activated, the pictorial illustration or sketch 55 is displayed.

As illustrated with respect to FIGURE 9f, if a continuous forms option is selected in FIGURE 9d, then the paper width is selected and then -- as indicated by box 69 -- the paper length choices are determined based upon the width selected; then length is selected.

As illustrated in FIGURE 9t, when the shipping information, function 39 in FIGURE 3, is entered, it is desirable to also display for the operator's selection the form of payment. Typical forms of payment would be C.O.D., account number with the forms manufacturer, or credit card. If the credit card option were initiated, then -- as illustrated schematically by box 70 -- in order to make the unit most user friendly the types of credit cards that are selectable would be pictorially displayed on screen 40 of monitor 15. If a color monitor 15 is available, the credit cards illustrated can be, e.g., an accurate representation of a typical VISA® or American Express® card, which minimizes the possibility that the user could make a mistake in entering information about one type of credit card thinking it was another. Once the credit card number is entered, then -- if it is determined to be valid -- the sub-routine of FIGURE 9t is completed.

FIGURE 9ad illustrates the routine when it is desired to transmit the completed information (see FIGURE 7). Ultimately, the last step of the routine -- as indicated by block 72 -- is to compress the order and the form design files, so that they can then be transmitted. In the system according to the invention -- as distinct from the prior art -- both the custom form design in machine format, and the order information in machine format, are simultaneously transmitted (preferably through modems 17, 18) to the first computer 10. The transmission -- which occurs immediately after compression at box 72 -- is illustrated schematically in FIGURE 9af.

The order receiving flow charts are illustrated in FIGURES 10a and 10b. These procedures are internal to the computer 10. Note that an invoice is automatically initiated at 74 if it is not a credit card charge. The order itself is handled in the routine illustrated in FIGURE 10b. Please note -- as indicated by box 75 -- that the order identification number (order confirmation) is generated and transmitted -- either electronically or by mail -- to the customer. The procedure in box 76 is typically effected at proof printer 22 (although proofing is optional), and at box 77 the order is evaluated in order to determine the optimum location for printing of the form, given the form type and shipping information, and the scheduling of the various production sites 27.

FIGURE 11 schematically illustrates the procedures at the production site 27, 28, the order having been received electronically in machine format and then scheduled for production. As illustrated by box 78, plate marks are added to the form file, and the form received from the customer -- with plate marks -- in machine format is used to generate a plate or negative for ultimate printing.

It will be seen that according to the invention, one can efficiently effect design, printing, and delivery of short runs of custom business forms, and for making any computer order system or the like more user friendly. According to the invention, the following general steps are taken: (a) at a first location, designing a custom business form in machine format, providing order information including quantity and shipping information in machine format, and automatically determining the cost of production using price information in machine format; (b) transmitting the custom business form in machine format and the order information in machine format to a second location, remote from the first location; (c) at the second location, automatically determining where and how best to produce the custom business form given the scheduling of printing facilities, the type of form, and the shipping information, and assigning the order to the optimum printing facility for production of that form; and (d) printing the custom business form order at the optimum printing facility, and shipping it in accordance with the shipping information from step (a).

The further step may be practiced, during the practice of step (a), of pictorially illustrating a custom business form on a computer monitor so that the form designer can better visualize the custom form being ordered. The still further step may be practiced, during the practice of step (a), of displaying or highlighting only subsequent options that are available for selection depending upon earlier selections made.

It will thus be seen that according to the present invention an effective and advantageous system has been provided for the production of short runs of custom business forms, and for making any computer order system or the like more user friendly.

## Claims

1. A system for ordering the production of custom business forms, each custom business form having a plurality of parameters that must be determined, and necessitating the inputting of order information, the system comprising:
a first computing means (10) for storing and manipulating data, at a first location;
a second computing means (13) for storing and manipulating data, at a second location, remote from said first location, and including a monitor (15);
first control means (16) arranged for controlling said second computing means to custom design a plurality of first parameters of a business form, to produce a custom business form in machine format;
the system being characterised by
second control means (16) storing price information and arranged for controlling said second computing means to display order parameters, including quantity and delivery options, for selection by an operator, to define a second plurality of business form parameters, representing an order for the production of said custom business form;
said second control means also arranged for automatically determining said first plurality of business form parameters from said customer business form in machine format and matching them with said second plurality of business form parameters so that all business form parameters from said first control means are entered in said second control means;
operator interface means (14) for said second computing means for allowing operator selection of order parameters and entry of any of said second plurality of business form parameters not automatically determined from said customer business form in machine format;
said second control means further including means arranged for controlling said second computing means to calculate prices once sufficient order and business form parameter data has been inputted, and, to provide a completed order in machine format; and by
first communication means (17, 18, 20) for transmitting the custom business form in machine format, and the completed order in machine format, from said second computing means to said first computing means.

2. A system as recited in claim 1 wherein said second control means further comprises means for distinctively displaying which of said second plurality of business form parameters has been automatically determined from said customer business form, and requiring operator selection through said operator interface means of non-distinctively displayed ones of said second plurality of business form parameters, in a predetermined sequence, before said order can be completed or transmitted by said first communication means.

3. A system as recited in claim 1 or claim 2 wherein said second plurality of parameters comprises a form type parameter which includes single sheet and multisheet edge connected set options.

4. A system as recited in claim 3 wherein said form type parameter for said multisheet edge connected set option includes the further parameter of which edge the sheets of the Set are to be connected at; and wherein said second control means comprises means for illustrating possible edges for connection dependent upon associated other parameters selected, in a pictorial simulation (47) of the form configuration with the edge connection options highlighted, on said second computing means monitor.

5. A system as recited in any of claims 1 to 4 comprising third control means and second communication means (17, 18), said third control means for controlling said first computing means (10) and said second communication means to transmit updated price information to said second control means (16) from said first computing means.

6. A system as recited in claim 5 further comprising means (27) for printing ordered customer business forms and an order confirmation, and fourth control means for controlling said first computing means to in turn control said printing means, using the machine format customer business form and completed order received from said second computing means.

7. A system as recited in any of claims 1 to 6 wherein said second plurality of parameters include business form size, number of parts, color of ink, numbering options, and form type, the form type including continuous forms, and multipart forms with the parts attached along an edge.

8. A system as recited in any of claims 1 to 7 wherein said second control means further comprises:
means for displaying on said monitor a first plurality of options for selection once one of said second parameters is activated; and
means for -- after selection of one of said first plurality of options -- displaying a second plurality of options for selection, and highlighting only those of said second plurality of options that are available for selection given the first plurality of options selected.

9. A system as recited in claim 8 wherein said second control means further comprises:
means for -- after selection of one of said second plurality of options -- displaying a third plurality of options for selection, and highlighting only those of said third plurality of options that are available for selection given the second plurality of options selected.

10. A system as recited in any of claims 1 to 9 wherein said second control means further comprises means for entry of a credit card number, and a pictorial representation of the credit card.

11. A system as recited in any of claims 1 to 10 comprising a plurality of printing locations (27), and further comprising control means for said first computing means for selecting which of the printing sites is most desirable to print the particular business form transmitted, and effecting production of the business form at the selected printing location.

12. A system as recited in claim 11 further comprising, at each printing site, computer means for receiving the form to be produced in machine format, and generating a plate or negative from the machine format of the business form, for printing of the form.

13. A method for producing short runs of custom business forms, comprising the steps of:
(a) at a first location (13), designing a custom business form in machine format, providing order information including quantity and shipping information in machine format, and automatically determining the cost of production using price information in machine format;
(b) transmitting the custom business form in machine format and the order information in machine format to a second location (10), remote from the first location;
(c) at the second location, automatically determining where and how best to produce the custom business form given the scheduling of printing facilities, the type of form, and the shipping information, and assigning the order to the optimum printing facility (27) for production of that form; and
(d) printing the custom business form order at the optimum printing facility, and shipping it in accordance with the shipping information from step (a).

14. A method as recited in claim 13 comprising the further step, during the practice of step (a), of pictorially illustrating a custom business form (55) on a computer monitor so that the form designer can better visualize the custom form being ordered.

15. A method as recited in claim 13 or claim 14 comprising the further step, during the practice of step (a), of displaying or highlighting only subsequent options that are available for selection depending upon earlier selections made.

## Patentansprüche

1. System zur Bestellung der Herstellung kundenspezifischer Geschäftsformulare, wobei jedes kundenspezifische Geschäftsformular eine Mehrzahl von Parametern aufweist, die bestimmt werden müssen, und die Eingabe von Bestellinformationen erfordert, wobei das System folgendes umfaßt:
ein erstes Berechnungsmittel (10) zum Speichern und Manipulieren von Daten an einem ersten Standort;
ein zweites Berechnungsmittel (13) zum Speichern und Manipulieren von Daten an einem zweiten Standort, der sich von dem besagten ersten Standort abgesetzt befindet, und mit einem Monitor (15);
ein erstes Steuermittel (16), das so angeordnet ist, daß es das besagte zweite Berechnungsmittel so steuert, daß es eine Mehrzahl erster Parameter eines Geschäftsformulars kundenspezifisch entwirft, um ein kundenspezifisches Geschäftsformular in Maschinenformat zu erzeugen; wobei das System durch folgendes gekennzeichnet ist:
ein zweites Steuermittel (16), das Preisinformationen speichert und so angeordnet ist, daß es das besagte zweite Berechnungsmittel so steuert, daß es durch einen Benutzer wählbare Bestellparameter anzeigt, darunter Mengen- und Lieferoptionen, um eine zweite Mehrzahl von Geschäftsformularparametern zu definieren, die eine Bestellung für die Herstellung des besagten kundenspezifischen Geschäftsformulars darstellen;
daß das besagte zweite Steuermittel außerdem so angeordnet ist, daß es automatisch die besagte erste Mehrzahl von Geschäftsformularparametern aus dem besagten Kunden-Geschäftsformular in Maschinenformat bestimmt und diese an die besagte zweite Mehrzahl von Geschäftsformularparametern angleicht, so daß alle Geschäftsformularparameter aus dem besagten ersten Steuermittel in das besagte zweite Steuermittel eingegeben werden;
ein Benutzerschnittstellenmittel (14) für das besagte zweite Berechnungsmittel zur Ermöglichung der Benutzerwahl der Bestellparameter und der Eingabe etwaiger der besagten zweiten Mehrzahl von Geschäftsformularparametern, die nicht automatisch aus dem besagten Kunden-Geschäftsformular in Maschinenformat bestimmt wurden;
daß das besagte zweite Steuermittel weiterhin ein Mittel enthält, das so angeordnet ist, daß es das besagte zweite Berechnungsmittel so steuert, daß es Preise berechnet, sobald ausreichende Bestell- und Geschäftsformularparameterdaten eingegeben wurden, und eine fertige Bestellung in Maschinenformat bereitstellt; und durch
erste Kommunikationsmittel (17, 18, 20) zur Übertragung des kundenspezifischen Geschäftsformulars in Maschinenformat und der fertigen Bestellung in Maschinenformat, aus dem besagten zweiten Berechnungsmittel zu dem besagten ersten Berechnungsmittel.

2. System nach Anspruch 1, wobei das besagte zweite Steuermittel weiterhin ein Mittel zur unterscheidbaren Anzeige umfaßt, welche der besagten zweiten Mehrzahl von Geschäftsformularparametern automatisch aus dem besagten Kunden-Geschäftsformular bestimmt wurden, und das Benutzerwahl durch das besagte Benutzerschnittstellenmittel nicht unterscheidbar angezeigter Geschäftsformularparameter der besagten zweiten Mehrzahl von Geschäftsformularparametern in einer vorbestimmten Reihenfolge erfordert, bevor die besagte Bestellung fertiggestellt oder durch das besagte erste Kommunikationsmittel übertragen werden kann.

3. System nach Anspruch 1 oder 2, wobei die besagte zweite Mehrzahl von Parametern einen Formulartypparameter umfaßt, der Einzelblatt- und Mehrblatt-Satzoptionen mit Randverbindung enthält.

4. System nach Anspruch 3, wobei der besagte Formulartypparameter für die besagte Mehrblatt-Satzoption mit Randverbindung den weiteren Parameter enthält, an welchem Rand die Blätter des Satzes verbunden werden sollen; und wobei das besagte zweite Steuermittel ein Mittel zur Darstellung möglicher Ränder für die Verbindung, abhängig von anderen, zugeordneten, gewählten Parametern, in einer bildlichen Simulation (47) der Formularkonfiguration mit hervorgehobenen Randverbindungsoptionen auf dem besagten Monitor des zweiten Berechnungsmittels, umfaßt.

5. System nach einem der Ansprüche 1 bis 4, mit einem dritten Steuermittel und zweiten Kommunikationsmitteln (17, 18), wobei das besagte dritte Steuermittel das besagte erste Berechnungsmittel (10) und die besagten zweiten Kommunikationsmittel so steuert, daß sie aktualisierte Preisinformationen aus dem besagten ersten Berechnungsmittel zu dem besagten zweiten Steuermittel (16) übertragen.

6. System nach Anspruch 5, weiterhin mit einem Mittel (27) zum Drucken bestellter Kunden-Geschäftsformulare und einer Bestätigung der Bestellung, und einem vierten Steuermittel, das das besagte erste Berechnungsmittel so steuert, daß es seinerseits unter Verwendung des Kunden-Geschäftsformulars in Maschinenformat und der fertigen, aus dem besagten zweiten Berechnungsmittel empfangenen Bestellung das besagte Druckermittel steuert.

7. System nach einem der Ansprüche 1 bis 6, wobei die besagte zweite Mehrzahl von Parametern die Größe des Geschäftsformulars, die Anzahl von Teilen, die Farbe der Druckfarbe, Numerierungsoptionen und den Formulartyp enthält, wobei der Formulartyp Endlos formulare und Formulare in mehreren Teilen enthält, wobei die Teile entlang einem Rand verbunden sind.

8. System nach einem der Ansprüche 1 bis 7, wobei das besagte zweite Steuermittel weiterhin folgendes umfaßt:
ein Mittel zur Anzeige einer ersten Mehrzahl von Optionen auf dem besagten Monitor, die gewählt werden, wenn einer der besagten zweiten Parameter aktiviert wurde; und
ein Mittel zur Anzeige - nach der Wahl einer Option der besagten ersten Mehrzahl von Optionen - einer zweiten Mehrzahl von Optionen zur Auswahl, und zur Hervorhebung nur derjenigen Optionen der besagten zweiten Mehrzahl von Optionen, die bei gegebenen gewählten Optionen der ersten Mehrzahl von Optionen zur Auswahl verfügbar sind.

9. System nach Anspruch 8, wobei das besagte zweite Steuermittel weiterhin folgendes umfaßt:
ein Mittel zur Anzeige - nach der Wahl einer Option der besagten zweiten Mehrzahl von Optionen - einer dritten Mehrzahl von Optionen zur Auswahl, und zur Hervorhebung nur derjenigen Optionen der besagten dritten Mehrzahl von Optionen, die bei gegebenen gewählten Optionen der zweiten Mehrzahl von Optionen zur Auswahl verfügbar sind.

10. System nach einem der Ansprüche 1 bis 9, wobei das besagte zweite Steuermittel weiterhin ein Mittel zur Eingabe einer Kreditkartennummer und eine bildliche Darstellung der Kreditkarte umfaßt.

11. System nach einem der Ansprüche 1 bis 10, mit einer Mehrzahl von Druckstandorten (27) und weiterhin mit einem Steuermittel für das besagte erste Berechnungsmittel zur Auswahl, welcher der Druckstandorte für das Drucken des bestimmten, übertragenen Geschäftsformulars am wünschenswertesten ist, und das die Herstellung des Geschäftsformulars an dem gewählten Druckstandort bewirkt.

12. System nach Anspruch 11, das weiterhin an jedem Druckstandort ein Computermittel zum Empfangen des herzustellenden Formulars in Maschinenformat und zum Erzeugen einer Platte oder eines Negativs des Geschäftsformulars aus dem Maschinenformat zum Drucken des Formulars umfaßt.

13. Verfahren zur Herstellung kleiner Serien kundenspezifischer Geschäftsformulare mit den folgenden Schritten:
(a) an einem ersten Standort (13), Entwerfen eines kundenspezifischen Geschäftsformulars in Maschinenformat, Bereitstellen von Bestellinformationen, darunter Mengen- und Auslieferungsinformationen in Maschinenformat, und automatisches Bestimmen der Herstellungskosten unter Verwendung von Preisinformationen in Maschinenformat;
(b) Übertragen des kundenspezifischen Geschäftsformulars in Maschinenformat und der Bestellinformationen in Maschinenformat zu einem zweiten Standort (10), der von dem ersten Standort abgesetzt liegt;
(c) an einem zweiten Standort, automatisches Bestimmen, wo und wie das kundenspezifische Geschäftsformular am besten herzustellen ist, wenn die Planung der Druckeinrichtungen, der Formulartyp und die Auslieferungsinformationen gegeben sind, und Zuweisen der Bestellung an die optimale Druckeinrichtung (27) zur Herstellung dieses Formulars; und
(d) Drucken der Bestellung des kundenspezifischen Geschäftsformulars auf der optimalen Druckeinrichtung und Auslieferung dieser gemäß den Auslieferungsinformationen aus Schritt (a).

14. Verfahren nach Anspruch 13, mit dem weiteren Schritt, während der Ausführung des Schritts (a), der bildlichen Darstellung eines kundenspezifischen Geschäftsformulars (55) auf einem Computermonitor, so daß sich der Formulardesigner das gerade bestellte kundenspezifische Formular besser vorstellen kann.

15. Verfahren nach Anspruch 13 oder 14, mit dem weiteren Schritt, während der Ausführung des Schritts (a), des Anzeigens oder Hervorhebens nur solcher nachfolgender Optionen, die abhängig von früher getroffenen Wahlen zur Auswahl verfügbar sind.

## Revendications

1. Système de commande de production de formulaires commerciaux personnalisés, chaque formulaire commercial personnalisé ayant une pluralité de paramètres qui doivent être déterminés, et nécessitant la saisie d'informations de commande, le système comprenant:
un premier moyen informatique (10) pour mémoriser et manipuler des données, en un premier emplacement;
un deuxième moyen informatique (13) pour mémoriser et manipuler des données, en un deuxième emplacement, éloigné dudit premier emplacement, et comportant un moniteur (15);
un premier moyen de commande (16) prévu pour commander ledit deuxième moyen informatique de manière à ce qu'il conçoive, en fonction des exigences du client, une pluralité de premiers paramètres d'un formulaire commercial, afin de produire un formulaire commercial personnalisé en format machine; le système étant caractérisé par
un deuxième moyen de commande (16) mémorisant des informations de prix et prévu pour commander ledit deuxième moyen informatique de manière à ce qu'il affiche des paramètres de commande, incluant les options de quantité et de livraison, pouvant être sélectionnés par un opérateur, pour définir une deuxième pluralité de paramètres de formulaire commercial, représentant une commande de production dudit formulaire commercial personnalisé;
ledit deuxième moyen de commande étant également prévu pour déterminer automatiquement ladite première pluralité de paramètres de formulaire commercial à partir dudit formulaire commercial du client en format machine et pour les faire correspondre à ladite deuxième pluralité de paramètres de formulaire commercial de sorte que tous les paramètres de formulaire commercial provenant dudit premier moyen de commande soient saisis dans ledit deuxième moyen de commande;
un moyen d'interface opérateur (14) pour ledit deuxième moyen informatique pour permettre la sélection, par l'opérateur, de paramètres de commande, et la saisie de n'importe quels paramètres parmi ladite deuxième pluralité de paramètres de formulaire commercial non déterminés automatiquement à partir dudit formulaire commercial du client en format machine;
ledit deuxième moyen de commande comportant en outre un moyen prévu pour commander ledit deuxième moyen informatique de manière à ce qu'il calcule des prix une foix que des données suffisantes de paramètres de formulaire commercial et de commande ont été saisies, et pour fournir une commande remplie en format machine; et par
un premier moyen de communication (17, 18, 20) pour transmettre le formulaire commercial personnalisé en format machine, et la commande remplie en format machine, depuis ledit deuxième moyen informatique audit premier moyen informatique.

2. Système selon la revendication 1, dans lequel ledit deuxième moyen de commande comprend en outre un moyen pour afficher, distinctement, lesquels, parmi ladite deuxième pluralité de paramètres de formulaire commercial, ont été automatiquement déterminés à partir dudit formulaire commercial du client, et nécessitant la sélection par l'opérateur, par le biais dudit moyen d'interface opérateur, de paramètres affichés non distinctement, parmi ladite deuxième pluralité de paramètres de formulaire commercial, en séquence prédéterminée, avant que ladite commande puisse être remplie ou transmise par ledit premier moyen de communication.

3. Système selon la revendication 1 ou la revendication 2, dans lequel ladite deuxième pluralité de paramètres comprend un paramètre de type de formulaire qui comporte des options à feuille unique ou à ensemble de plusieurs feuilles connectées par les bords.

4. Système selon la revendication 3, dans lequel ledit paramètre de type de formulaire pour ladite option à ensemble de plusieurs feuilles connectées par les bords inclut le paramètre supplémentaire du choix du bord par lequel les feuilles de l'ensemble doivent être connectées; et dans lequel ledit deuxième moyen de commande comprend un moyen pour illustrer des bords possibles pour la connexion en fonction d'autres paramètres associés, sélectionnés, dans une simulation graphique (47) de la configuration du formulaire, avec les options de connexion des bords en surbrillance, sur le moniteur dudit deuxième moyen informatique.

5. Système selon l'une quelconque des revendications 1 à 4, comprenant un troisième moyen de commande et un deuxième moyen de communication (17, 18), ledit troisième moyen de commande servant à commander ledit premier moyen informatique (10) et ledit deuxième moyen de communication servant à transmettre les information de prix mises à jour audit deuxième moyen de commande (16) depuis ledit premier moyen informatique.

6. Système selon la revendication 5, comprenant en outre un moyen (27) pour imprimer des formulaires commerciaux commandés du client et une confirmation de commande, et un quatrième moyen de commande pour commander ledit premier moyen informatique de manière à ce qu'il commande à son tour ledit moyen d'impression, en utilisant le formulaire commercial du client en format machine et la commande remplie reçue dudit deuxième moyen informatique.

7. Système selon l'une quelconque des revendications 1 à 6, dans lequel ladite deuxième pluralité de paramètres inclut la taille du formulaire commercial, le nombre de parties, la couleur de l'encre, les options de numérotation, et le type de formulaire, le type de formulaire incluant les formulaires continus, et les formulaires en plusieurs parties, les différentes parties étant attachées le long d'un bord.

8. Système selon l'une quelconque des revendications 1 à 7, dans lequel ledit deuxième moyen de commande comprend en outre:
un moyen pour afficher, sur ledit moniteur, une première pluralité d'options à sélectionner une fois que l'un desdits deuxièmes paramètres est activé; et
un moyen pour -après la sélection de l'une parmi ladite première pluralité d'options- afficher une deuxième pluralité d'options à sélectionner, et pour mettre en surbrillance seules les options parmi ladite deuxième pluralité d'options qui sont disponibles pour la sélection en fonction de la première pluralité d'options sélectionnées.

9. Système selon la revendication 8, dans lequel ledit deuxième moyen de commande comprend en outre:
un moyen pour -après la sélection de l'une parmi ladite deuxième pluralité d'options- afficher une troisième pluralité d'options à sélectionner, et pour mettre en surbrillance seules les options parmi ladite troisième pluralité d'options qui sont disponibles pour la sélection en fonction de la deuxième pluralité d'options sélectionnée.

10. Système selon l'une quelconque des revendications 1 à 9, dans lequel ledit deuxième moyen de commande comprend en outre un moyen pour saisir un numéro de carte de crédit, et une représentation graphique de la carte de crédit.

11. Système selon l'une quelconque des revendications 1 à 10, comprenant une pluralité d'emplacements d'impression (27), et comprenant en outre un moyen de commande pour ledit premier moyen informatique pour sélectionner lequel des sites d'impression est le plus préférable pour imprimer le formulaire commercial particulier transmis, et effectuant la production du formulaire commercial à l'emplacement d'impression sélectionné.

12. Système selon la revendication 11, comprenant en outre, en chaque site d'impression, un moyen informatique pour recevoir le formulaire à produire en format machine, et pour générer un cliché ou un négatif à partir du format machine du formulaire commercial, pour l'impression du formulaire.

13. Procédé de production de tirages courts de formulaires commerciaux personnalisés, comprenant les étapes consistant à :
(a) en un premier emplacement (13), concevoir un formulaire commercial personnalisé en format machine, fournir des informations de commande incluant les informations de quantité et d'expédition en format machine, et déterminer automatiquement le coût de production en utilisant les informations de prix en format machine;
(b) transmettre le formulaire commercial personnalisé en format machine et les informations de commande en format machine à un deuxième emplacement (10), éloigné du premier emplacement;
(c) au deuxième emplacement, déterminer automatiquement où et comment produire au mieux le formulaire commercial personnalisé en fonction de la programmation des installations d'impression, du type de formulaire, et des informations d'expédition, et affecter la commande à l'installation d'impression (27) optimale pour la production de ce formulaire; et
(d) imprimer la commande du formulaire commercial personnalisé sur l'installation d'impression optimale et l'expédier conformément aux informations d'expédition de l'étape (a).

14. Procédé selon la revendication 13, comprenant l'étape supplémentaire, au cours de l'exécution de l'étape (a), consistant à illustrer graphiquement un formulaire commercial personnalisé (55) sur un moniteur d'ordinateur de sorte que le concepteur du formulaire puisse mieux visualiser le formulaire personnalisé commandé.

15. Procédé selon la revendication 13 ou la revendication 14, comprenant l'étape supplémentaire, au cours de l'exécution de l'étape (a), consistant à afficher ou mettre en surbrillance uniquement les options subséquentes qui sont disponibles pour la sélection en fonction des sélections effectuées préalablement.
